# EUROPÄISCHE PATENTSCHRIFT

(11) **EP 3 847 008 B1**
(45) Veröffentlichungstag und Bekanntmachung des Hinweises auf die Patenterteilung: **22.01.2025**
(21) Anmeldenummer: 19769409.4
(22) Anmeldetag: 09.09.2019
(51) Int. Cl.: B29C 71/00, B29C 64/35, B33Y 40/00, C08J 7/02

(54) **VORRICHTUNG UND VERFAHREN ZUR OBERFLÄCHENBEHANDLUNG VON FORMTEILEN**
DEVICE AND METHOD FOR TREATING THE SURFACE OF MOLDED PARTS
DISPOSITIF ET PROCÉDÉ DE TRAITEMENT DE SURFACE DE PIÈCES MOULÉES

(30) Priorität: 07.09.2018 DE 102018121915
(43) Veröffentlichungstag der Anmeldung: 14.07.2021
(60) Teilanmeldung: 24220328.9
(73) Patentinhaber: DyeMansion GmbH, 82152 Planegg (DE)
(72) Erfinder: KRAMER, Philipp, 80339 München (DE); EWALD, Felix, 80689 München (DE); NÄTHER, Tibor, 80639 München (DE)
(74) Vertreter: 2s-ip Schramm Schneider Bertagnoll Patent- und Rechtsanwälte Part mbB
(86) Internationale Anmeldenummer: PCT/EP2019/073984
(87) Internationale Veröffentlichungsnummer: WO 2020/049186

(56) Entgegenhaltungen:
- WO-A1-2018/127683
- US-A1- 2009 321 972

## Beschreibung

### Gebiet der Erfindung

Die Erfindung betrifft ein Verfahren zum Behandeln einer Oberfläche zumindest eines in einem 3D-Druckvefahren hergestellten Formteils gemäß Anspruch 1 sowie eine Vorrichtung zum Behandeln einer Oberfläche zumindest eines in einem 3D-Druckverfahren hergestellten Formteils gemäß Anspruch 19.

### Hintergrund der Erfindung

Es ist bekannt, Formteile in einem 3D-Druckverfahren herzustellen. Unter 3D-Druckverfahren werden additive Fertigungsverfahren verstanden, bei denen ein Formteil schichtweise aufgebaut wird, insbesondere unter Verwendung eines Kunststoffes.

Derartige additive Fertigungsverfahren haben den Nachteil, dass die damit hergestellten Formteile in der Regel keine geschlossene Oberfläche, d.h. eine fertigungsbedingte raue Oberfläche aufweisen, was in vielen Fällen den haptischen Eindruck beim Benutzer des Formteils negativ beeinflussen kann. Zudem neigt eine raue Oberfläche eines solchen Formteiles dazu, relativ schnell zu verschmutzen, wobei ein Reinigen der Oberfläche nur mit erheblichem Aufwand möglich ist. Zudem weist die Oberfläche solcher Formteile fertigungsbedingt eine Vielzahl von Poren auf.

Um die Oberflächen der in einem 3D-Druckverfahren hergestellten Formteile zu glätten, können die Oberflächen mechanisch bearbeitet werden, beispielsweise abgeschliffen und/oder gestrahlt werden. Nachteilig ist hierbei allerdings, dass ein - wenn auch geringer - Materialabtrag von der Oberfläche des Formteils erfolgt, der zum Erzielen der gewünschten Oberflächenglätte meist oberhalb vorbestimmter Toleranzwerte liegt, sodass mit dem Glätten der Oberfläche eine unerwünschte Veränderung der Geometrie des Formteils einhergeht. Zudem gelangt man beim Schleifen nicht in kleine Ecken oder kleine Aussparungen, die dann unbearbeitet bleiben und damit nicht geglättet sind. Bei flexiblen Formteilen lassen sich solche mechanische Verfahren zum Glätten der Oberfläche nicht oder nur sehr schwer anwenden. Zudem können Bereiche der Oberfläche, die extrem konkav ausgestaltet sind oder Hinterschneidungen aufweisen, nur unter hohem Aufwand oder gar nicht mechanisch geglättet werden. Bei sehr filigranen Oberflächenstrukturen besteht beim Schleifen oder beim Strahlen zudem die Gefahr, dass diese beschädigt werden. Ferner werden an der Oberfläche vorhandene Poren auch beim Schleifen oder Strahlen nur unzureichend geschlossen.

Ein weiterer Nachteil der mechanischen Oberflächenglättung besteht darin, dass sich diese für eine Serienfertigung nicht eignen.

Das Dokument WO 2018/127683 A1 offenbart ein Verfahren und eine Vorrichtung zur Behandlung einer Oberfläche mindestens eines in einem 3D-Druckverfahren hergestellten Formteils.

### Aufgabe der Erfindung

Aufgabe der vorliegenden Erfindung ist es daher, Lösungen bereitzustellen, die es erlauben, Oberflächen von in einem 3D-Druckverfahren hergestellten Formteilen effizient zu glätten bzw. zu homogenisieren, ohne dass es hierbei zu wesentlichen Veränderungen der Geometrie der Formteile kommt und die auch bei flexiblen Formteilen und bei Formteilen, die mechanisch schwer zu bearbeitende Oberflächenabschnitte aufweisen, effizient einsetzbar sind.

### Erfindungsgemäße Lösung

Diese Aufgabe wird erfindungsgemäß durch ein Verfahren zum Behandeln einer Oberfläche zumindest eines in einem 3D-Druckverfahren hergestellten Formteils und eine Vorrichtung zum Behandeln einer Oberfläche zumindest eines in einem 3D-Druckverfahren hergestellten Formteils nach den unabhängigen Ansprüchen gelöst. Vorteilhafte Ausgestaltungen und Weiterbildungen der Erfindung ergeben sich aus den jeweiligen abhängigen Ansprüchen. Unter 3D-Druckverfahren werden rein additive Fertigungsverfahren verstanden.

Bereitgestellt wird demnach ein Verfahren zum Behandeln einer Oberfläche zumindest eines in einem 3D-Druckverfahren hergestellten Formteils, wobei:
(a) das Formteil in einen Innenraum eines druckdichten Behältnisses eingebracht wird,
(b) nach dem Einbringen des Formteils in das Behältnis, im Innenraum des Behältnisses ein Unterdruck, vorzugsweise ein weitgehendes Vakuum erzeugt wird,
(c) ein Lösungsmittel bis auf eine vorbestimmte Lösungsmitteltemperatur erwärmt wird, und
(d) nach dem Einbringen des Formteils in den Innenraum des Behältnisses das erwärmte Lösungsmittel aus einem Lösungsmittelbehältnis in den den Unterdruck aufweisenden Innenraum eingebracht wird, wobei das Lösungsmittelbehältnis druckdicht ausgestaltet ist und wobei vor dem Einbringen des Lösungsmittels aus dem Lösungsmittelbehältnis in den Innenraum des druckdichten Behältnisses im Innenraum des Lösungsmittelbehältnisses ein Unterdruck, insbesondere weitgehendes Vakuum, erzeugt wird, wobei
   - die Temperatur des Formteils niedriger ist als die Lösungsmitteltemperatur, und
   - beim Einbringen des Lösungsmittels in den Innenraum das Lösungsmittel verdampft oder das Lösungsmittel als Lösungsmitteldampf in den Innenraum eingebracht wird, wobei der Lösungsmitteldampf an der Oberfläche des Formteils kondensiert.

Vorteilhaft ist es, wenn nach dem Einbringen des Formteils in das Behältnis im Innenraum des Behältnisses ein Unterdruck erzeugt wird, der kleiner als 10 mbar ist.

Durch den Unterdruck bzw. das weitgehende Vakuum in dem Innenraum des Behältnisses wird gewährleistet, dass das Lösungsmittel in dampfförmiger Form in den Innenraum gelangt und aufgrund der niedrigeren Temperatur des Formteils an dessen Oberfläche kondensiert. Mit Hilfe der Temperaturdifferenz zwischen dem Formteil und dem Lösungsmitteldampf und der Dauer der Lösungsmittelzufuhr und gegebenenfalls der Druckdifferenz zwischen dem Lösungsmittelbehältnis und dem Innenraum des druckdichten Behältnisses kann das sich an der Oberfläche des Formteils bildende Lösungsmittelkondensat sehr genau gesteuert werden, wodurch wiederum der Grad des Anlösens der Oberfläche gesteuert werden kann. Mit einem Lösungsmittelbad, in das das zu behandelnde Formteil eingelegt wird, kann dies nicht erreicht werden.

Vorteilhaft kann es sein, wenn vor dem Schritt (a) oder nach dem Schritt (a) der Innenraum des druckdichten Behältnisses auf eine vorbestimmte erste Innentemperatur gebracht wird. Hierzu kann in dem Innenraum des druckdichten Behältnisses ein Temperatursensor angeordnet sein.

Durch das Einbringen des Lösungsmittels in den Innenraum (Schritt (d)) kann die Temperatur des Innenraumes auf eine vorbestimmte zweite Innentemperatur, die niedriger oder höher sein kann als die vorbestimmte erste Innentemperatur, gebracht werden, wobei
- solange Lösungsmittel in den Innenraum eingebracht wird, bis vorbestimmte zweite Innentemperatur erreicht ist, oder
- über einen vorbestimmten Zeitraum Lösungsmittel in den Innenraum eingebracht wird, wobei nach dem vorbestimmten Zeitraum die vorbestimmte zweite Innentemperatur erreicht wird.

Die erste Innentemperatur und die zweite Innentemperatur können gleich hoch sein.

Die zweite Innentemperatur kann also höher, genauso hoch oder niedriger sein, als die erste Innentemperatur. Ein Absenken der Temperatur kann durch das natürliche Abkühlen der Kammer bzw. die Verdünstungskühle verursacht werden, sowie aktiv durch eine Kühleinheit ermöglicht werden.

In einer Ausgestaltung der Erfindung kann es vorteilhaft sein, wenn über einen Zeitraum von zwischen 1 s und 600 s, vorzugweise von zwischen 5 s und 300 s, Lösungsmittel in den Innenraum eingebracht wird (Schritt (d)).

Vorteilhaft kann es sein, wenn nach dem Einbringen des Formteils in den Innenraum (Schritt (a)) und vor dem Einbringen des Lösungsmittels in den Innenraum (Schritt(d)) die Temperatur des Innenraumes auf eine dritte Innentemperatur gebracht wird.

Die dritte Innentemperatur kann niedriger sein als die vorbestimmte zweite Innentemperatur, wodurch das Formteil auf eine Teiletemperatur gebracht wird, die niedriger ist als die vorbestimmte zweite Innentemperatur. In einer Ausgestaltung des Verfahrens kann die Teiletemperatur gleich groß sein wie die dritte Innentemperatur.

In einer Ausgestaltung der Erfindung kann
(e) nach dem Einbringen des Lösungsmittels in den Innenraum das Formteil getrocknet werden.

Vorteilhaft ist es, wenn das Formteil in dem den Unterdruck aufweisenden Innenraum getrocknet, insbesondere vakuumgetrocknet wird.

Vorteilhaft kann es ein, wenn das Formteil im Innenraum getrocknet wird, wobei zum Trocknen des Formteils in dem Innenraum ein Unterdruck, vorzugsweise ein weitgehendes Vakuum, erzeugt wird, wobei das Erzeugen des Unterdruckes zumindest einmal unterbrochen wird, indem ein Transportgas den Innenraum zugeführt wird. Nach dem Zuführen des Transportgases kann das Erzeugen des Unterdruckes fortgesetzt werden. Dieses Vorgehen kann mehrfach wiederholt werden.

Vorteilhaft kann es hierbei sein, wenn das Transportgas dem Innenraum zugeführt wird, wenn der Druck im Innenraum kleiner ist als 50 mbar, wobei durch das Zuführen des Transportgases der Druck im Innenraum auf einen Wert von zwischen 50 mbar und 100 mbar erhöht wird. Nach dem Erreichen eines Druckes zwischen 50 mbar und 100 mbar kann das Erzeugen des Unterdruckes fortgesetzt werden, bis der Innendruck wieder kleiner als 50 mbar ist. Dieses Vorgehen kann mehrfach wiederholt werden.

Gemäß einer vorteilhaften Ausgestaltung des Verfahrens können die Schritte (d) und (e) mehrfach wiederholt werden.

Hierbei kann es vorteilhaft sein, wenn bei einer Wiederholung
- in dem Schritt (d) die Temperatur des Innenraumes auf eine zweite Innentemperatur gebracht wird, die höher ist als die zweite Innentemperatur bei der vorhergehenden Ausführung des Schrittes (d), oder
- in dem Schritt (d) die Temperatur des Innenraumes auf eine zweite Innentemperatur gebracht wird, die niedriger ist als die zweite Innentemperatur bei der vorhergehenden Ausführung des Schrittes (d), oder
- in dem Schritt (d) die Temperatur des Innenraumes auf eine zweite Innentemperatur gebracht wird, die gleich ist wie die zweite Innentemperatur bei der vorhergehenden Ausführung des Schrittes (d).

Bei einer Wiederholung kann vor dem Ausführen des Schrittes (d) die Temperatur des Innenraumes auf eine Temperatur gebracht wird, die niedriger oder höher ist als die zweite Innentemperatur bei der vorhergehenden Ausführung des Schrittes (d).

Vorteilhaft kann es sein, wenn die Temperatur des Lösungsmittels nach jeder Wiederholung reduziert wird.

Nach dem Schritt (d) kann das im Innenraum verdampfte Lösungsmittel und/oder das an der Innenwandung des Innenraumes kondensierte Lösungsmittel abgesaugt werden.

Das abgesaugte Lösungsmittel kann aufbereitet, insbesondere gereinigt und destilliert werden und das aufbereitete Lösungsmittel kann in das Lösungsmittelbehältnis zurückgeführt werden. Dadurch ergibt sich in einer besonders vorteilhaften Ausgestaltung der Erfindung ein Verfahren, bei dem ein Lösungsmittel verwendet wird, welches beliebig oft ohne Einbußen der Qualität des Glättergebnisses im Kreislauf verwendet werden kann, ohne dass hierbei Lösungsmittelabfälle oder andere entsorgungspflichtige Produkte entstehen.

Erfindungsgemäß können der Unterdruck im Innenraum, die Lösungsmitteltemperatur und die Innentemperaturen so aufeinander abgestimmt werden, dass beim Einbringen des Lösungsmittels in den Innenraum das Lösungsmittel in dem Innenraum verdampft oder als Lösungsmitteldampf in den Innenraum gelangt.

Dabei kann es aufgrund der Druckdifferenz zwischen dem Lösungsmittelbehältnis und dem Innenraum des druckdichten Behältnisses zu Verwirbelungen im Innenraum kommen, die eine homogene Verteilung des Lösungsmittels um das Bauteil herum, besonders im Bereich von Hinterschneidungen, Kavitäten, Röhren und Sacklöchern ermöglichen. Dadurch wird ein homogenes Glätten auch an schwer zugänglichen Oberflächenbereichen gewährleistet.

Es hat sich als vorteilhaft herausgestellt, wenn das eingebrachte Formteil in den Schritten (d) und/oder (e) bewegt, insbesondere rotiert wird. Tropfen- bzw. Nasenbildung an der Oberfläche des Formteils kann so verhindert werden.

Optional kann die Oberfläche des Formteils vor dem Einbringen in den Innenraum mechanisch bearbeitet werden, insbesondere geschliffen oder gestrahlt werden.

Optional, aber dennoch vorteilhaft ist es, wenn
- das Formteil vor dem Schritt (a) oder nach dem Schritt (d) gefärbt wird, und/oder
- das Formteil vor dem Schritt (a) von Restpulver befreit wird, sofern das Formteil in einem pulverbasierten Verfahren gedruckt wurde, und/oder
- das Formteil nach dem Schritt (d) mattiert wird, insbesondere mittels Strahlen der Oberfläche, und/oder geschliffen wird, und/oder
- das Formteil nach dem Schritt (d) imprägniert und/oder lackiert wird, und/oder
- die Oberfläche des Formteils vor dem Schritt (a) oder nach dem Schritt (d) verdichtet wird, insbesondere mittels Strahlen der Oberfläche mit Kunststoffkugeln, und/oder
- die Oberfläche des Formteils vor dem Schritt (a) oder nach dem Schritt (d) geglättet wird, insbesondere mittels Schleifen.

Das Formteil kann vor dem Schritt (a) erwärmt werden. Dies ist besonders für Materialien, welche zur Wasseraufnahme neigen, vorteilhaft, da diese sonst während des Glättens durch das Verdampfen des gebundenen Wassers (bei hohen Temperaturen und/oder bei Unterdruck) zu einer zusätzlichen Blasenbildung neigen.

Das Lösungsmittel (sowohl klassische Lösungsmittel als auch Hochsieder) kann ausgewählt werden aus der Gruppe umfassend Acetaldehyd, Acetamid, Aceton, Acetonitril, Acetophenon, Acetylen, aliphatische Kohlenwasserstoffe, insbesondere Cyclohexan, Cyclohexen, Diisobutylen, Hexan, Octan, n-Pentan und Terpinen, Alkohole, insbesondere Benzylalkohol, Butylenglycol, Butanol, Ethanol, Ethylenglycol, Methanol, Allylalkohol, n-Propanol und Isopropanol, Amylacetat, Anilin, Anisol, Benzin, Benzaldehyd, Benzol, Chlorbenzol, Decalin, Dioxan, Dimethylamid, Diemethylformaid,, Diethylether, Dimethylformamid, Dimehtylsulfid, Dimethylsulfoxid, Ethylbenzol, Ethylacetat, Formaldehyd, Formamid, Furfurol, Halogenkohlenwasserstoffe, insbesondere Chlorbrommethan, Chloroform, Ethylenchlorid, Methylenchlorid, Perchlorethylen, Tetrachlormethan, Trichlorethan und Trichlorethylen, Menthon, Methyl-tert-butylether, Methylethylenketon, Nitrobenzol, Phenole, Phenylethylalkohol, Propanol, Pyridin, Styrol, Tetrahydrofuran, Tetrahydronaphthalin, Toluol, Triethanolamin, und Kombinationen hiervon.

Besonders vorteilhaft ist es, wenn das Lösungsmittel ein destillierbares Lösungsmittel ist.

Für die Herstellung (Drucken) des Formteils kann das Material des Formteils ausgewählt werden aus der Gruppe umfassend Polyester, PA12 (Polyamid 12), PP (Polypropylen), TPU (thermoplastisches Polyurethan), TPE (Thermoplastische Elastomere), PA11 (Polyamid 11), PA6 (Polyamid 6), PA6.6 (Polyamid 6.6), glasgefülltes Polyamid, Keramik gefülltes Polyamid, PU (Polyurethan), ABS (Acrylnitril-Butadien-Styrol-Copolymere), PEK (Polyetherketone), PEI (Polyetherimide), PPS (Polyphenylensulfide) und PLA (Polylactide), Cyanate Ester, Materialien die auf (Meth)acrylaten basieren, und Kombinationen hiervon.

Vorteilhaft ist es , wenn das Formteil in einem pulverbasierten 3D-Druckverfahren, insbesondere in einem pulverbasierten Schichtbauverfahren, bei dem einzelne Schichten miteinander verschmolzen werden, insbesondere im SLS-Verfahren (Selektives Lasersintern), MJF-Verfahren (Multijet Fusion) oder HSS-Verfahren (High-Speed Sintering), hergestellt wird.

Vorteilhaft ist es, wenn mehrere Liter Lösungsmittel, vorzugsweise mindestens 20 Liter Lösungsmittel auf die vorbestimmte Lösungsmitteltemperatur erwärmt werden.

Es kann vorteilhaft sein, wenn das Lösungsmittel auf die vorbestimmte Lösungsmitteltemperatur erwärmt wird, die oberhalb von 100°C liegt.

Das Lösungsmittelbehältnis ist druckdicht ausgestaltet, wobei vor dem Einbringen des Lösungsmittels aus dem Lösungsmittelbehältnis in den Innenraum des druckdichten Behältnisses im Innenraum des Lösungsmittelbehältnisses ein Unterdruck erzeugt wird.

Vorteilhaft kann es hierbei sein, wenn im Innenraum des Lösungsmittelbehältnisses weitgehendes Vakuum erzeugt wird.

Besonders vorteilhaft ist es, wenn der Druck im Innenraum des druckdichten Behältnisses kleiner ist als der Druck im Innenraum des Lösungsmittelbehältnisses.

In einer Ausgestaltung der Erfindung kann es vorteilhaft sein, wenn die Druckdifferenz zwischen dem Innenraum des druckdichten Behältnisses und dem Innenraum des Lösungsmittelbehältnisses so gewählt wird, dass das in den Innenraum des druckdichten Behältnisses eingebrachte Lösungsmittel aufgrund der Druckdifferenz verwirbelt wird.

Es hat sich als Vorteilhaft herausgestellt, wenn als Lösungsmittel ein lebensmittelechtes Lösungsmittel oder ein Lösungsmittel, das für die Bearbeitung von Kunststoffen für Lebensmittel zugelassen ist, verwendet wird.

Bereit gestellt wird des Weiteren eine Vorrichtung zum Behandeln einer Oberfläche, insbesondere nach dem erfindungsgemäßen Verfahren, zumindest eines in einem 3D-Druckverfahren hergestellten Formteils, wobei die Vorrichtung aufweist
- ein druckdichtes Behältnis mit einem Innenraum, in dem die zu behandelnden Formteile aufgenommen werden,
- ein Lösungsmittelbehältnis zur Aufnahme eines Lösungsmittels, wobei das Lösungsmittelbehältnis druckdicht ausgestaltet ist und wobei das Lösungsmittelbehältnis eine Heizeinrichtung aufweist, um das in dem Lösungsmittelbehältnis aufgenommene Lösungsmittel zu erwärmen, und
- eine Vakuumpumpe,
- das Lösungsmittelbehältnis über eine Zuleitung mit dem druckdichten Behältnis gekoppelt ist, um das Lösungsmittel aus dem Lösungsmittelbehältnis dem druckdichten Behältnis zuzuführen,
- die Vakuumpumpe mit dem druckdichten Behältnis gekoppelt ist, um in dem druckdichten Behältnis einen Unterdruck, vorzugsweise ein weitgehendes Vakuum zu erzeugen, und
- wobei eine Vakuumpumpe mit dem Lösungsmittelbehältnis gekoppelt ist, um in dem

Lösungsmittelbehältnis einen Unterdruck, vorzugsweise ein weitgehendes Vakuum zu erzeugen.

Das Lösungsmittelbehätnis weist eine Heizeinrichtung auf, um das in dem Lösungsmittelbehältnis aufgenommene Lösungsmittel zu erwärmen.

Ferner kann es vorteilhaft sein, wenn das druckdichte Behältnis eine Heizeinrichtung aufweist, um den Innenraum und/oder die in den Innenraum aufgenommenen Formteile zu erwärmen.

Erfindungsgemäß ist das Lösungsmittelbehältnis druckdicht ausgebildet.

Erfindungsgemäß ist eine Vakuumpumpe mit dem Lösungsmittelbehältnis gekoppelt, um in dem Lösungsmittelbehältnis einen Unterdruck, vorzugsweise ein weitgehendes Vakuum zu erzeugen.

Vorteilhaft kann es sein, wenn dem Lösungsmittelbehältnis und/oder dem druckdichten Behältnis ein Temperatursensor und/oder ein Drucksensor zugeordnet ist.

Die Vorrichtung kann eine Steuer-/Regeleinrichtung aufweisen, mit der
- die Heizeinrichtung des druckdichten Behältnisses und die Vakuumpumpe regelbar und/oder steuerbar sind, um den Druck und die Temperatur im Innenraum des druckdichten Behältnisses einzustellen, und
- die Heizeinrichtung des Lösungsmittelbehältnisses regelbar und/oder steuerbar ist, um die Temperatur des Lösungsmittels einzustellen.

Das druckdichte Behältnis kann mit einer Absaugeinrichtung gekoppelt sein, um im druckdichten Behältnis vorhandenen Lösungsmitteldampf und/oder Lösungsmittelkondensat abzusaugen.

Die Absaugeinrichtung kann über eine Rückleitung mit dem Lösungsmittelbehältnis gekoppelt sein, um den abgesaugten Lösungsmitteldampf und/oder das abgesaugte Lösungsmittelkondensat dem Lösungsmittelbehältnisses zurückzuführen. Die Vorrichtung kann eine Reinigungs- und/oder Destilliereinrichtung aufweisen, die angepasst ist den abgesaugten Lösungsmitteldampf und/oder das abgesaugte Lösungsmittelkondensat zu reinigen und/oder zu destillieren.

Gemäß einer Ausgestaltung der Erfindung kann die Vorrichtung zumindest ein weiteres Lösungsmittelbehältnis aufweist, das über zumindest eine weitere Zuleitung mit dem druckdichten Behältnis gekoppelt ist, um zumindest ein weiteres Lösungsmittel aus dem zumindest einen weiteren Lösungsmittelbehältnis dem druckdichten Behältnis zuzuführen. Damit können unterschiedliche Lösungsmittel für die Behandlung der Oberfläche verwendet werden, etwa ein erstes Lösungsmittel in einem ersten Behandlungszyklus und ein zweites Lösungsmittel in einem zweiten Behandlungszyklus.

Das Lösungsmittelbehältnis ist druckdicht.

### Kurzbeschreibung der Figuren

Weitere Einzelheiten und Merkmale der Erfindung ergeben sich aus der nachfolgenden Beschreibung in Verbindung mit der Zeichnung. Es zeigt:
- Fig. 1: eine vergrößerte Darstellung eines Ausschnittes einer Oberfläche eines in einem 3D-Druckverfahren hergestellten Formteils, die nach dem erfindungsgemäßen Verfahren geglättet wird;
- Fig. 2: ein Ablaufdiagramm zur Verdeutlichung des erfindungsgemäßen Verfahrens;
- Fig. 3: ein erstes Beispiel für einen Temperaturverlauf der Innentemperatur eines Innenraumes einer Oberflächenbearbeitungsvorrichtung, wobei hier dreimal ein Lösungsmittel in den Innenraum gegeben wurde;
- Fig. 4: ein zweites Beispiel für einen Temperaturverlauf der Innentemperatur eines Innenraumes einer Oberflächenbearbeitungsvorrichtung, wobei hier dreimal ein Lösungsmittel in den Innenraum gegeben wurde;
- Fig. 5: ein drittes Beispiel für einen Temperaturverlauf der Innentemperatur eines Innenraumes einer Oberflächenbearbeitungsvorrichtung, wobei hier dreimal ein Lösungsmittel in den Innenraum gegeben wurde;
- Fig. 6: ein viertes Beispiel für einen Temperaturverlauf der Innentemperatur eines Innenraumes einer Oberflächenbearbeitungsvorrichtung, wobei hier dreimal ein Lösungsmittel in den Innenraum gegeben wurde;
- Fig. 7: ein fünftes Beispiel für einen Temperaturverlauf der Innentemperatur eines Innenraumes einer Oberflächenbearbeitungsvorrichtung, wobei hier dreimal ein Lösungsmittel in den Innenraum gegeben wurde;
- Fig. 8: eine schematische Darstellung einer erfindungsgemäßen Vorrichtung zum Behandeln einer Oberfläche zumindest eines in einem 3D-Druckverfahren hergestellten Formteils.

### Detaillierte Beschreibung der Erfindung

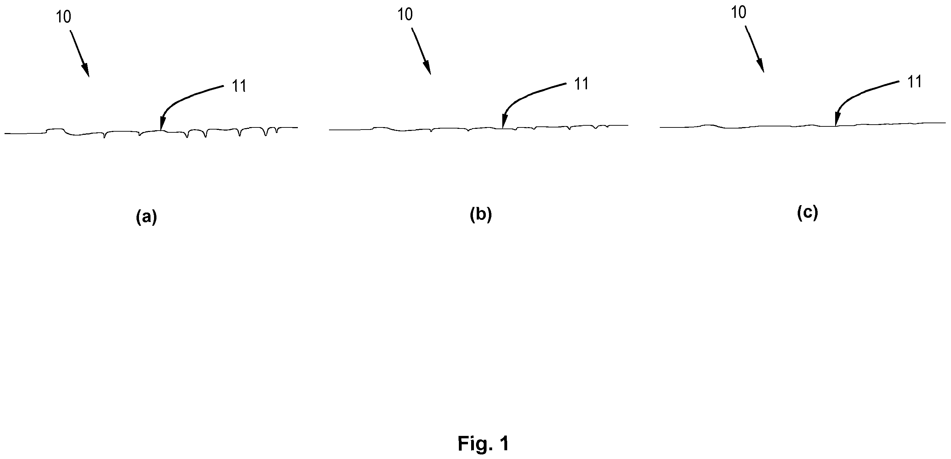

**Fig. 1** zeigt in Abbildung (a) einen vergrößerten Ausschnitt einer Oberfläche 11 eines in einem 3D-Druckverfahren hergestellten Formteils 10. Zur Herstellung des Formteils 10 ist hier ein pulverbasiertes Druckverfahren verwendet worden. Die Oberfläche 11 des Formteils 10 weist fertigungsbedingte Unebenheiten, insbesondere Poren auf, die ein Anhaften von Schmutz bzw. Verunreinigungen an der Oberfläche 11 des Formteils 10 begünstigen. Die raue bzw. poröse Oberfläche 11 des Formteils 10 wirkt sich zudem negativ auf die Haptik des Formteils 10 aus. Die in Abbildung (a) gezeigte Oberfläche wurde noch nicht mit dem erfindungsgemäßen Verfahren bearbeitet.

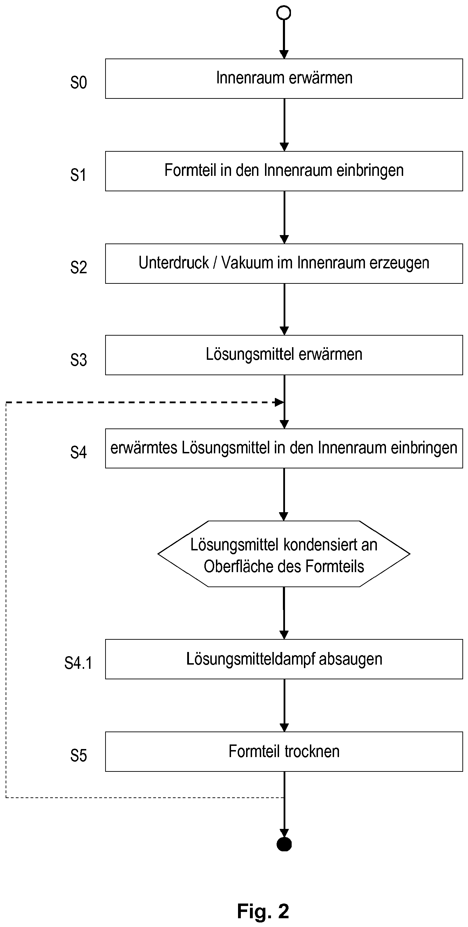

Erfindungsgemäß wir die Oberfläche 11 des Formteils 10 geglättet, um die Unebenheiten, insbesondere die Poren zu beseitigen bzw. zu verschließen. Hierzu wird an der Oberfläche 11 des Formteils 10 ein Lösungsmittel in Form von Lösungsmitteldampf aufgebracht, der an der Oberfläche des Formteils kondensiert. Anschließend wird das Formteil getrocknet. Das erfindungsgemäße Verfahren zum Behandeln der Oberfläche wird im Detail mit Bezug auf Fig. 2 bis Fig. 6 beschrieben.

Das Behandeln der Oberfläche 11 kann mehrere Zyklen umfassen, wobei in jedem Zyklus Lösungsmittel, d.h. Lösungsmitteldampf auf die Oberfläche aufgebracht wird und anschließend das Formteil 10 getrocknet wird. Je nach verwendetem Material, das zur Herstellung des Formteils in dem 3D-Druckverfahren verwendet wurde, und je nach Anforderung der zu erreichenden Glätte der Oberfläche kann ein einziger Zyklus ausreichend sein. Mehrere Zyklen sind jedoch vorteilhaft.

Die Abbildung (b) zeigt die Oberfläche 11 des Formteils 10 nach einem ersten Behandlungszyklus, in dem Lösungsmittel in Form von Lösungsmitteldampf auf die Oberfläche 11 aufgebracht wurde und anschließend getrocknet wurde. Deutlich erkennbar ist hier, dass die Oberfläche 11 im Vergleich zu der in Abbildung (a) gezeigten Oberfläche deutlich glatter ist, insbesondere nahezu keinerlei Poren aufweist.

Um eine noch weitere Glättung der Oberfläche zu bewirken, kann ein weiterer Bearbeitungszyklus durchgeführt werden, in dem nochmals Lösungsmittel in Form von Lösungsmitteldampf auf die Oberfläche 11 des Formteils 10 aufgebracht wird und anschließend das Formteil 10 getrocknet wird.

Die Abbildung (c) zeigt die Oberfläche 11 des Formteils 10 nach dem zweiten Behandlungszyklus. Erkennbar ist hierbei, dass die Oberfläche 11 im Vergleich zu der in Abbildung (b) gezeigten Oberfläche noch weiter geglättet wurde. Zudem ist erkennbar, dass das Glättungsverfahren zu nahezu keiner Veränderung der Geometrie des Formteils geführt hat. Im Unterschied zur mechanischen Oberflächenbehandlung findet hier nahezu kein Materialabtrag statt, da mit dem auf der Oberfläche 11 aufgebrachten Lösungsmittel die Oberfläche der Formteile lediglich leicht angelöst wird, wodurch Unebenheiten beseitigt werden. Ein wesentlicher Vorteil besteht jedoch darin, dass an der Oberfläche vorhandene Poren verschlossen werden.

Die so behandelten Formteile weisen hinsichtlich der Oberflächenglätte eine besonders hohe Güte auf, sodass in vielen Fällen auch auf ein Imprägnieren der Oberfläche verzichtet werden kann.

**Fig. 2** zeigt ein Ablaufdiagramm gemäß eines Ausführungsbeispiels des erfindungsgemäßen Verfahrens.

Für die Durchführung des Verfahrens ist eine Vorrichtung vorgesehen, die ein druckdichtes Behältnis mit einem Innenraum, in dem die Oberfläche des Formteils behandelt wird, und ein Behältnis, das ein Lösungsmittel enthält, aufweist. Diese beiden Behältnisse sind über eine Leitung miteinander verbunden, wobei über ein Ventil die Zufuhr von Lösungsmittel in das Behältnis, in dem das Formteil behandelt wird, gesteuert wird. Das Behältnis, in dem das Formteil behandelt wird, ist druckdicht ausgestaltet. Das Behältnis, das das Lösungsmittel enthält, ist vorzugsweise ebenfalls druckdicht ausgestaltet.

Das in einem 3D-Druckverfahren hergestellte Formteil wird in dem Schritt S1 in den Innenraum des druckdichten Behältnisses eingebracht.

Vor dem Einbringen des Formteils in das druckdichte Behältnis kann das Formteil auf eine bestimmte Temperatur erwärmt werden, beispielsweise auf etwa zwischen 90 und 120°C. Wie weit das Formteil erwärmt werden kann, hängt im Wesentlichen von dem verwendeten Material bzw. Kunststoff ab, mit dem das Formteil in dem 3D-Druckverfahren hergestellt wird. Demzufolge kann das Formteil je nach verwendetem Material auf über 120°C oder auch nur auf eine Temperatur unterhalb von 90°C erwärmt werden. Die maximale Temperatur, auf die das Formteil erwärmt werden kann, ist in jedem Fall so einzustellen, dass sich das Formteil aufgrund der Temperatur nicht verformt. Zudem ist die maximale Temperatur, auf die das Formteil erwärmt wird, so einzustellen, dass im nachfolgenden Verarbeitungsprozess die Temperatur des Formteils aufgrund des in den Innenraum des druckdichten Behältnisses einströmenden Lösungsmitteldampfes weiter ansteigen kann, ohne dass es hierbei zu Verformungen des Formteils kommt.

Alternativ zum Erwärmen des Formteils vor dem Einbringen des Formteils in das druckdichte Behältnis kann das Formteil auch nach dem Einbringen in das druckdichte Behältnis erwärmt werden, d.h. im druckdichten Behältnis erwärmt werden.

Hierzu kann in einem Schritt S0, der vor dem Schritt S1 ausgeführt wird, der Innenraum des druckdichten Behältnisses auf eine vorbestimmte Temperatur, beispielsweise 130°C erwärmt werden. Die Erwärmung des Innenraumes des druckdichten Behältnisses kann mit einer Heizeinrichtung, beispielsweise mittels Heizmanschetten durchgeführt werden. Das Erwärmen kann mittels eines Temperatursensors, der im Innenraum des druckdichten Behältnisses angeordnet ist, kontrolliert werden.

Nachdem der Innenraum die vorbestimmte Temperatur erreicht hat, kann das Formteil in den Innenraum des druckdichten Behältnisses eingebracht werden (Schritt S1). Das eingebrachte Formteil wird so auf eine bestimmte Temperatur erwärmt, wobei sich die Innentemperatur des Innenraums gleichzeitig etwas abkühlt, da das Formteil beim Erwärmen eine bestimmte Menge an Wärmeenergie aufnimmt bzw. das druckdichte Behältnis Wärme an die Umgebung abgibt. Beispielsweise kann sich der Innenraum des druckdichten Behältnisses auf etwa 108°C abkühlen, und das Formteil erwärmt sich auf etwa 108°C, vorzugsweise auf maximal 108°C.

Mit Hilfe der Heizeinrichtung kann bei Bedarf gewährleistet werden, dass die Innentemperatur nach dem Einbringen des Formteils in den Innenraum nicht unterhalb einer bestimmten Temperatur absinkt bzw. überhaupt nicht absinkt. Wird etwa der Innenraum auf 130°C erwärmt kann also gewährleistet werden, dass die Temperatur des Innenraumes nach dem Einbringen des Formteils bei annähernd 130°C bleibt oder nicht unterhalb von beispielsweise 108°C absinkt.

Alternativ kann der Schritt S0 auch nach dem Schritt S1 ausgeführt werden. D.h., dass nach dem Einbringen des Formteils in den Innenraum des druckdichten Behältnisses der Innenraum des druckdichten Behältnisses erwärmt wird, beispielsweise auf etwa 108°C. Damit wird auch das eingebrachte Formteil auf etwa 108°C erwärmt.

Nach dem Einbringen des Formteils wird im Innenraum des druckdichten Behältnisses ein Unterdruck, vorzugsweise ein weitgehendes Vakuum erzeugt. Unterdruck bedeutet hierbei ein Druck unterhalb des Atmosphärendruckes. Im Zusammenhang mit der vorliegenden Erfindung bedeutet Vakuum ein Druck unter 300 mbar.

Vorteilhaft ist es, wenn das Erzeugen des Unterdruckes bzw. des Vakuums in dem Innenraum des druckdichten Behältnisses unmittelbar nach dem Einbringen des Formteils in den Innenraum erfolgt, um ein Vergilben oder anderweitiges Verfärben der Formteile während des Erwärmens zu verhindern. Es hat sich gezeigt, dass ein Vergilben der Formteile beim Erwärmen der Formteile verhindert werden kann, wenn diese keinem bzw. nahezu keinem Sauerstoff ausgesetzt sind. Demzufolge ist es vorteilhaft, unmittelbar nach dem Einbringen des Formteiles in das druckdichte Behältnis in dem druckdichten Behältnis einen Unterdruck bzw. ein Vakuum zu erzeugen, und zwar unabhängig davon, ob der Schritt S0 vor dem Schritt S1 oder nach dem Schritt S1 ausgeführt wird.

In einem Schritt S3 wird das in dem Lösungsmittelbehältnis gespeicherte Lösungsmittel auf eine vorbestimmte Lösungsmitteltemperatur erwärmt, beispielsweise auf 130°C. Das Lösungsmittelbehältnis ist druckdicht ausgestaltet. Es hat sich als besonders vorteilhaft herausgestellt, wenn die Menge an erwärmtem Lösungsmittel mehrere Liter, vorzugsweise mindestens 20 Liter, beträgt. Damit kann sichergestellt werden, dass ausreichend Lösungsmittel in geeigneter Temperatur für den Prozess zur Verfügung steht. Dies ermöglicht einen besonders stabilen und damit reproduzierbaren Prozess, welcher auch unabhängig von der zu bearbeiteten Teilemenge bzw. deren Oberfläche durchgeführt werden kann, ohne dass dies Einfluss auf das Glättergebnis hat.

Das Erwärmen des Lösungsmittels in dem Lösungsmittelbehältnis kann beispielsweise mittels einer Manschetten- bzw. Mantelheizung oder direkt über Heizstäbe erfolgen.

Für viele Anwendungen hat sich eine Lösungsmitteltemperatur von über 100°C als besonders vorteilhaft erwiesen, da dadurch über den gesamten Prozess hinweg sichergestellt werden kann, dass eine ausreichende Temperaturdifferenz zwischen den zu glättenden Teilen und dem Lösemitteldampf besteht. Dadurch wird die Kondensation des Lösungsmittels an der Oberfläche sichergestellt. Gleichzeitig ist eine erhöhte Temperatur des Lösungsmittels ausschlaggebend für die Temperatur des Lösungsmittelkondensates, welche ihrerseits die Lösefähigkeit des Lösungsmittels und damit das Glättergebnis entscheidend beeinflusst.

Der Schritt S3 kann hierbei vor den Schritten S0 bis S2 oder parallel zu den Schritten S0 bis S2 durchgeführt werden, wobei lediglich gewährleistet sein muss, dass das Lösungsmittel vor der Durchführung des Schrittes S4 die vorbestimmte Lösungsmitteltemperatur erreicht hat. Dies kann mit Hilfe eines Temperatursensors in dem druckdichten Lösungsmittelbehältnis geprüft werden. Nachdem das Lösungsmittel die vorbestimmte Lösungsmitteltemperatur erreicht hat und der Innenraum des druckdichten Behältnisses bzw. das in den Innenraum eingebrachte Formteil die gewünschte Temperatur erreicht hat, wird in dem Schritt S4 das erwärmte Lösungsmittel in den den Unterdruck aufweisenden Innenraum des druckdichten Behältnisses eingebracht. Dies kann beispielsweise durch Öffnen eines Ventils erfolgen, das den Innenraum des druckdichten Behältnisses von dem Innenraum des Lösungsmittelbehältnisses trennt.

Durch das Öffnen dieses Ventils und aufgrund des Druckunterschiedes zwischen dem Innenraum des druckdichten Behältnisses und dem Lösungsmittelbehältnis gelangt eine bestimmte Menge an Lösungsmittel in den gasleeren und aufgewärmten Innenraum des druckdichten Behältnisses und verdampft dort schlagartig. Alternativ hierzu kann bereits Lösungsmitteldampf in den gasleeren und aufgewärmten Innenraum des druckdichten Behältnisses gelangen.

Ob Lösungsmitteldampf in den Innenraum gelangt oder ob Lösungsmittel in den Innenraum gelangt und dort schlagartig verdampft hängt letztlich von den Temperatur- und Druckverhältnissen in dem Innenraum und in dem Lösungsmittelbehältnis ab. Vorteilhaft ist es aber, wenn das Lösungsmittel bereits als Lösungsmitteldampf in den Innenraum gelangt. Hierbei ist es besonders vorteilhaft, wenn auch der Lösungsmittelbehälter einen Unterdruck, besonders bevorzugt ein weitgehendes Vakuum aufweist. Dadurch wird ein Verdampfen von höher siedenden Lösungsmitteln bei Temperaturen ermöglicht, die niedrig genug sind, um das Formteil, beispielsweise ein Formteil aus einem Polymer mit vergleichsweise niedrigem Schmelzpunkt, nicht zu zerstören. Für Benzylalkohol als Lösungsmittel hat sich beispielsweise ein Druck im Lösungsmittelbehältnis von 100 mbar bis 150 mbar bei einer Lösungsmitteltemperatur von etwa140°C als vorteilhaft erwiesen. Damit kann auch für hochsiedende Lösungsmittel eine Dampftemperatur erreicht werden, die geeignet ist die Formteile zu bearbeiten, ohne dass die Formteile durch die thermische Belastung zerstört werden oder sich auflösen bzw. vollständig auflösen. Der Unterdruck im Lösungsmittelbehälter bringt darüber hinaus auch den Vorteil eines sehr sicheren Prozesses mit sich, da ein Entweichen von Lösungsmittel durch den erzeugten Unterdruck nahezu ausgeschlossen ist und im Falle einer Undichtigkeit lediglich Luft angesaugt werden würde. Der Druck im Lösungsmittelbehältnis kann mit Hilfe eines Drucksensors überwacht werden.

Die Temperatur des Innenraumes des druckdichten Behältnisses und der in dem Innenraum erzeugte Unterdruck und die Lösungsmitteltemperatur sind so aufeinander abzustimmen, dass das in den Innenraum eingebrachte Lösungsmittel schlagartig verdampfen kann sofern nicht bereits Lösungsmitteldampf dem Innenraum des druckdichten Behältnisses zugeführt wird. Drücke im Innenraum des druckdichten Behältnisses von unter 10 mbar haben sich als besonders vorteilhaft herausgestellt.

Weil das Lösungsmittel bereits in einem druckdichten Lösungsmittelbehälter verdampft wird und dies nur durch das Erzeugen eines Unterdruckes in dem Lösungsmittelbehältnis realisiert werden kann (wenn beispielsweise Benzylalkohol bei einer maximalen Lösungsmitteltemperatur von 140°C verdampfen soll), ergibt sich durch den besonders niedrigen Druck von unter 10 mbar im Innenraum des druckdichten Behälters der technische Vorteil, dass ein ausreichend großes Druckgefälle (zwischen dem Innenraum des druckdichten Behältnisses und dem Innenraum des druckdichten Lösungsmittelbehälters) besteht, um das verdampfte Lösungsmittel effizient dem druckdichten Innenraum zuzuführen.

Für Lösungsmittel mit einer niedrigen Verdampfungstemperatur kann die Innenraumtemperatur des druckdichten Behältnisses niedriger gewählt werden und/oder in den Innenraum des druckdichten Behältnisses können niedrigere Unterdrücke erzeugt werden. Es hat sich jedoch gezeigt, dass sehr hohe Unterdrücke, etwa ein nahezu vollkommenes Vakuum die Verdampfung des eingebrachten Lösungsmittels begünstigen, insbesondere da, um ein Vergilben der eingebrachten Formteile beim Erwärmen der Formteile zu verhindern, ohnehin ein weitgehendes Vakuum erzeugt werden sollte.

Aufgrund der Temperaturdifferenz zwischen den in den Innenraum des druckdichten Behältnisses eingebrachten Formteilen und des in diesen Innenraum eingebrachten Lösungsmitteldampfes (die Formteile weisen zunächst eine niedrigere Temperatur auf als das eingebrachte Lösungsmittel) kondensiert der Lösungsmitteldampf an der Oberfläche des Formteils. Das an der Oberfläche des Formteils kondensierte Lösungsmittel löst die Oberfläche des Formteiles leicht an, wodurch Poren an der Oberfläche verschlossen und die Oberfläche dadurch geglättet wird. Wieviel Dampf an der Oberfläche des Formteils kondensiert hängt im Wesentlichen von der Temperaturdifferenz zwischen dem Formteil und dem eingebrachten Lösungsmitteldampf ab. Zudem ist die Menge des sich an der Oberfläche des Formteils bildenden Kondensats entscheidend für den Grad der Anlösung und damit für die effektiv bewirkte Glättung der Oberfläche.

Wichtig bei dem erfindungsgemäßen Verfahren ist daher, dass zum einen die richtige Dampftemperatur des Lösungsmittels erreicht wird, da bei zu niedrigen Temperaturen nicht ausreichend Dampf gebildet wird und dadurch die Oberfläche des Formteils nur unzureichend angelöst wird. Zudem kann sich bei zu niedrigen Dampftemperaturen zwar ein Lösungsmittelkondensat an der Oberfläche des Formteils absetzen, die Temperatur des Kondensats kann aber zu niedrig sein, um das Anlösen der Oberfläche zu gewährleisten. Daher ist es für viele Formteilmaterial/Lösungsmittel-Kombinationen besonders vorteilhaft, wenn das Lösungsmittel auf eine Temperatur von über 100 °C erwärmt wird.

Zu hohe Dampftemperaturen können hingegen ein zu starkes Anlösen der Oberfläche des Formteils bewirken, was zu einer Geometrieänderung des Formteiles führen kann, oder wodurch eine Tropfen- bzw. Nasenbildung unterstützt wird. Ferner kann ein zu starkes Anlösen der Oberfläche bei der anschließenden Vakuumtrocknung zu einer Bläschenbildung an der Oberfläche führen.

Zum anderen müssen die in den Innenraum eingebrachten Formteile vor dem Einbringen des erwärmten Lösungsmittels eine bestimmte Temperatur aufweisen, damit die Temperaturdifferenz zwischen dem Formteil und dem eingebrachten Lösungsmitteldampf das Erzeugen einer bestimmten Menge an Kondensat an der Oberfläche des Formteiles bewirkt.

Letztlich müssen die Parameter (Innentemperatur des Innenraumes des druckdichten Behältnisses bzw. Temperatur des Formteils, Temperatur des Lösungsmittels und Druck im Innenraum des druckdichten Behältnisses und gegebenenfalls Druck im Innenraum des Lösungsmittelbehälters) in Abhängigkeit vom verwendeten Lösungsmittel und vom Material des Formteiles so aufeinander abgestimmt werden, dass sich an der Oberfläche des zu behandelnden Formteiles eine bestimmte Menge an Lösungsmittelkondensat bildet, die den gewünschten Glättungseffekt bewirkt. Die Temperatur des Formteils ist hierbei in jedem Fall geringer als die Temperatur des Lösungsmittels bzw. des Lösungsmitteldampfes. Gleichzeitig ist der Druck im Innenraum des druckdichten Behältnisses geringer als der Druck im Innenraum des Lösungsmittelbehälters, wobei beide einen Unterdruck oder ein weitgehendes Vakuum aufweisen können.

Durch das Einbringen des Lösungsmittels in den den Unterdruck aufweisenden Innenraum des druckdichten Behältnisses und die schlagartige Verdampfung des Lösungsmittels bzw. durch das Einbringen des Lösungsmitteldampfes in den den Unterdruck aufweisenden Innenraum des druckdichten Behältnisses steigt die Temperatur im Innenraum des druckdichten Behältnisses stetig an. Durch das Kondensieren des Lösungsmitteldampfes wird eine Druckreduzierung im Innenraum des druckdichten Behältnisses bewirkt, wodurch stetig weiteres Lösungsmittel in den Innenraum eingebracht wird und schlagartig verdampft bzw. stetig weiterer Lösungsmitteldampf in den Innenraum eingebracht wird.

Das Ventil bleibt solange offen, bis im Innenraum des druckdichten Behältnisses eine vorbestimmte Temperatur erreicht ist. Die zu erreichende Temperatur im Innenraum des druckdichten Behältnisses (Solltemperatur bzw. vorbestimmte zweite Temperatur) wird so gewählt, dass sich an der Oberfläche des Formteiles nur so viel Kondensat bildet, das für den gewünschten Glättungseffekt ausreichend ist.

Wird das Ventil zu lange offen gehalten, kann die Temperatur im Innenraum des druckdichten Behältnisses über die gewünschte Solltemperatur ansteigen, was zu einer zu großen Menge an Kondensat an der Oberfläche des Formteiles und damit zu einem zu starken Anlösen der Oberfläche des Formteiles führen kann. Durch ein zu starkes Anlösen der Oberfläche des Formteiles durch das Lösungsmittelkondensat können sich bei der anschließenden Vakuumtrocknung (Schritt S5) Materialblasen bilden, da sich das an der Oberfläche gebildete Lösungsmittel-Kunststoffgemisch anfangen kann zu kochen. Beim gleichzeitigen Aushärten der Oberfläche können sich dann Blasen oder Krater bilden.

Es hat sich als vorteilhaft erwiesen, wenn das Ventil für eine Zeit zwischen 1 s und 600 s offen gehalten wird. Besonders vorteilhaft ist eine Ventilöffnungszeit von 5 s bis 300 s. Allerdings ist zu bedenken, dass die Ventilöffnungszeit von der Ausführung des Ventils abhängt und gegebenenfalls die Ventilöffnungszeit an den Ventildurchmessers angepasst werden muss.

Als vorteilhaft hat sich herausgestellt, die in das druckdichte Behältnis eingebrachten Formteile während der Bedampfungsphase im Innenraum zu rotieren oder alternativ die im Innenraum starr angeordneten Formteile zusammen mit dem Innenraum bzw. mit dem druckdichten Behältnis zu rotieren. Dadurch kann eine Tropfenbildung erheblich reduziert werden.

Das Vermeiden bzw. die erhebliche Reduzierung der Tropfenbildung kann alternativ oder zusätzlich auch mittels einer in dem Innenraum des druckdichten Behältnisses angeordneten Verwirbelungseinheit, etwa ein Ventilator, bewirkt werden, die den eingebrachten Lösungsmitteldampf verwirbelt. Ein solches Verwirbeln des eingebrachten Lösungsmitteldampfes kann auch durch den Druckunterschied zwischen dem Innenraum des Lösungsmittelbehältnisses und dem Innenraum des druckdichten Behältnisses bewirkt oder unterstützt werden.

Nach dem Einbringen des erwärmten Lösungsmittels in dem Schritt S4 werden in dem Schritt S5 die Formteile getrocknet. In einer Ausgestaltung der Erfindung können die Formteile zum Trocknen aus dem druckdichten Behältnis herausgenommen werden.

In einer alternativen Ausgestaltung der Erfindung, die sich als vorteilhaft herausgestellt hat, ist es vorgesehen, die Formteile in dem den Unterdruck aufweisenden Innenraum des druckdichten Behältnisses zu trocknen. Dies hat den Vorteil, dass der Trocknungsprozess bei Unterdruck bzw. Vakuum erheblich schneller von statten geht. Besonders vorteilhaft ist es, wenn unmittelbar vor dem Trocknen der Formteile in einem Schritt S4.1 der sich im Innenraum des druckdichten Behältnisses befindliche Lösungsmitteldampf und gegebenenfalls das sich an der Innwandung gebildete und am Boden des Innenraumes angesammelte Lösungsmittelkondensat abgesaugt wird. Das Absaugen von Lösungsmittel kann auch während des gesamten Trocknungsprozesses erfolgen. Dies hat den Vorteil, dass bereits kondensiertes Lösungsmittel direkt ablaufen kann und nicht erst wieder verdampft werden muss, ehe es aus der Kammer entfernt wird. Dadurch kann das Formteil innerhalb weniger Sekunden getrocknet werden.

Der abgesaugte Lösungsmitteldampf bzw. Lösungsmittelkondensat können dann gegebenenfalls gefiltert und gereinigt werden und anschließend in das Lösungsmittelbehältnis zurückgeführt werden. Damit kann das Lösungsmittel in einem Kreislauf verwendet werden. Dies bringt den technischen Vorteil mit sich, dass während des Prozesses keine entsorgungspflichtigen Materialien oder andere Abfälle anfallen. Somit handelt es sich bei dem Prozess um ein ressourcenschonendes, effizientes Verfahren. Zudem wird durch das Absaugen des Lösungsmittels gewährleistet, dass der Benutzer nie in direkten Kontakt mit dem Lösungsmittel kommt.

Ein besonders effizientes Vakuumtrocknen (bzw. Unterdrucktrocknen) kann erzielt werden, wenn das Erzeugen des Unterdruckes / Vakuums in der druckdichten Kammer durch ein kontrolliertes Einströmen eines Transportgases unterbrochen wird. In einer Ausgestaltung der Erfindung kann ein solches Transportgas zyklisch durchgeführt werden, d.h. das Erzeugen des Unterdruckes / Vakuums wird zyklisch unterbrochen. Dies bringt den technischen Vorteil mit sich, dass auch Vakuumpumpen mit geringerer Saugleistung die Lösungsmittelrückstände vollständig aus dem Innenraum des druckdichten Behälters entfernen können. Um durch den Druckanstieg im Innenraum des druckdichten Behälters, der durch das Zuführen des Transportgases bewirkt wird, kein erneutes kondensieren des Lösemittels an der Oberfläche der Formteile zu bewirken, ist es hierbei besonders vorteilhaft, wenn die einströmende Menge an Transportgas kontrolliert wird und der Druck in dem druckdichten Innenraum dabei nicht zu stark ansteigt. Ein Druckanstieg von 8 mbar auf etwa zwischen 50 mbar und 100 mbar und ein anschließendes erneutes evakuieren auf 8 mbar hat sich hierbei als besonders vorteilhaft und effizient erwiesen. Für den Fall, dass als Transportgas ein Sauerstoffhaltiges Gas, etwa Luft verwendet wird, bringt das "niedrighalten" des Druckes (d.h. der Druck wird auf einen Wert unterhalb vom 100 mbar gehalten) darüber hinaus den technischen Vorteil, dass ein Vergilben der Teile durch Oxidation verhindert wird. Dieses Risiko bestünde für den Fall, dass sehr viel Sauerstoff während des Trocknungsvorganges in die Kammer eindringt, da die Formteile zu diesem Zeitpunkt immer noch eine erhöhte Temperatur aufweisen und damit, etwa im Falle von Formteilen aus Polyamid, sehr oxidationsempfindlich sind.

Nach dem Vakuumtrocknen des Formteiles kann dieses in dem letzten Schritt aus dem druckdichten Behältnis entnommen werden, wobei vor der Entnahme des Formteiles der Innenraum des druckdichten Behältnisses optional auf eine bestimmte Temperatur abgekühlt werden kann. Vor Allem im Falle eines Vakuumtrocknens direkt vor der Entnahme der Formteile ist das zuvor beschriebene effiziente Vakuumtrocknen unter Zuführung eines Transportgases gegenüber einem Trocknen ohne Zuführung eines Transportgas zu bevorzugen.

Die Schritte S4, S5 und gegebenenfalls S4.1 werden zusammen als ein Zyklus (Verarbeitungszyklus) bezeichnet.

In einer Ausgestaltung der Erfindung kann es vorgesehen sein, diesen Zyklus, d.h. die Schritte S4 und S5 sowie gegebenenfalls den Schritt S4.1, mehrfach zu wiederholen. Dies hat sich insbesondere dann als vorteilhaft herausgestellt, wenn durch das Anlösen der Oberfläche, das durch das Einbringen des Lösungsmitteldampfes in dem Schritt S4 bewirkt wird, kein ausreichender Glättungseffekt erzielt werden kann. Dies kann etwa dann der Fall sein, wenn aufgrund des Formteilmaterials und des verwendeten Lösungsmittels nur sehr kurze Bedampfungszeiten möglich sind, ohne das Formteil zu beschädigen.

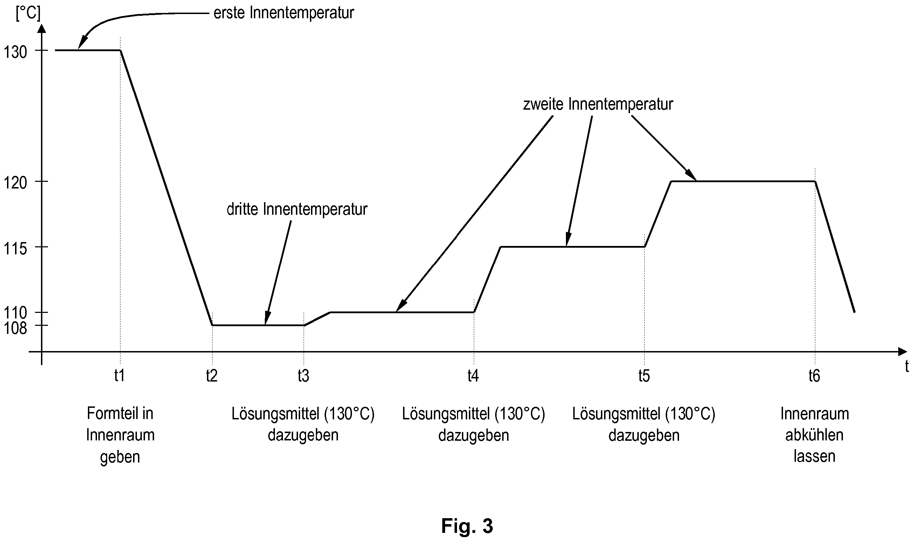

Nach dem ersten Zyklus, d.h. nach dem erstmaligen Bedampfen und dem erstmaligen Vakuumtrocknen der Formteile ist die Temperatur des Formteiles höher als zu Beginn des ersten Zyklus, da durch das Einbringen des Lösungsmitteldampfes die Temperatur im Innenraum des druckdichten Behältnisses und damit auch die Temperatur des Formteiles ansteigt. Das bedeutet, dass beim nächsten Zyklus solange Dampf dem Innenraum des druckdichten Behältnisses zugeführt werden muss, bis der Innenraum bzw. das Formteil eine Temperatur erreicht, bei der sich an der Oberfläche des Formteiles genügend Kondensat absetzt, um den gewünschten Glättungseffekt zu erzielen (beispielhaft in Fig. 3 gezeigt). Da die Temperatur des Formteiles zu Beginn des zweiten Zyklus höher ist als zu Beginn des ersten Zyklus (sofern das Formteil zwischen zwei Zyklen nicht gekühlt wird) ist die Temperaturdifferenz zwischen der Temperatur des Formteiles und der Temperatur des Lösungsmittels nicht mehr groß genug, um bei Zugabe der gleichen Lösungsmittelmenge wie in dem ersten Zyklus genügend Kondensat an der Oberfläche des Formteiles zu erzeugen.

Dieser Zyklus kann im Prinzip beliebig oft wiederholt werden. Allerdings sind der Anzahl von Wiederholungen dort Grenzen gesetzt, wo aufgrund der Wiederholungen die Temperatur des Formteiles einen Wert erreicht, bei dem die Formteile zerstört würden. Ein beispielhafter Temperaturverlauf der Innentemperatur des Innenraumes des druckdichten Behältnisses wird mit Bezug auf Fig. 3 bis Fig. 6 näher beschrieben.

Um die geringere Temperaturdifferenz zwischen dem Formteil und dem eingebrachten Lösungsmittel nach jedem Zyklus auszugleichen, kann es auch vorgesehen sein, das Lösungsmittel nach jedem Zyklus entsprechend weiter zu erwärmen, um für den nächsten Zyklus wieder die gewünschte Temperaturdifferenz zwischen der Temperatur des Formteils und der Temperatur des Lösungsmittels zu erreichen.

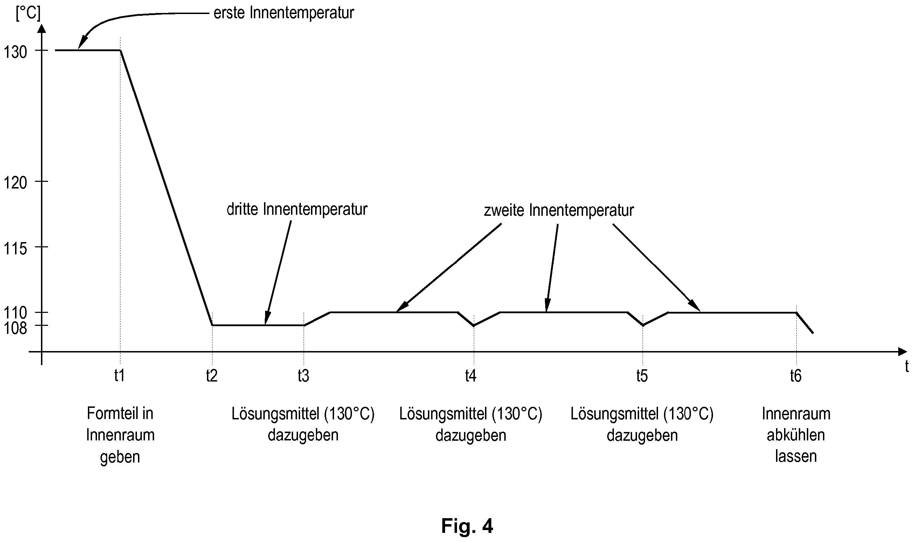

In einer alternativen Ausgestaltung des Verfahrens kann vor dem Einbringen des erwärmten Lösungsmittels in dem nächsten Zyklus die Temperatur des Innenraumes des druckdichten Behältnisses abgesenkt werden, vorzugsweise soweit, bis die gewünschte Temperaturdifferenz zwischen dem Formteil und dem einzubringenden Lösungsmittel wieder erreicht wird. Beispielsweise kann die Temperatur des Innenraumes auf jenen Wert abgesenkt werden, bei dem in dem ersten Zyklus Lösungsmittel in den Innenraum eingebracht wurde (wie in Fig. 4 gezeigt). Das Abkühlen kann hier bereits indirekt durch die Verdampfungskühle während des Erzeugens des Unterdruckes bzw. des Vakuums erzielt werden. Bei dieser alternativen Ausgestaltung des Verfahrens kann das Formteil beliebig oft bedampft werden, d.h. es können beliebig viele Zyklen wiederholt werden. Es hat sich allerdings gezeigt, dass je nach Material des Formteiles und je nach verwendetem Lösungsmittel zwischen drei und sechs Zyklen ausreichend sein können, um ein optimales Glättungsergebnis zu erreichen.

Das erfindungsgemäße Verfahren eignet sich insbesondere für Formteile, die im SLS-Verfahren (Selektives Lasersintern), MJF-Verfahren (Multijet Fusion), HSS-Verfahren (High Speed Sintering), FDM-Verfahren (Fused Deposition Modeling) und SLA-Verfahren (Stereolithografie) hergestellt wurden. Besonders vorteilhaft ist das erfindungsgemäße Verfahren für Formteile, die in einem pulverbasierten Schichtbauverfahren, bei dem einzelne Schichten miteinander verschmolzen werden, etwa das SLS-, das MJF- oder das HSS-Verfahren, hergestellt wurden, da bei diesen pulverbasierten Verfahren die Oberfläche besonders rau ist und mit Poren versetzt ist.

Für die Herstellung der Formteile können Polymere, insbesondere nachfolgend genannte Materialien verwendet werden, die sich für das erfindungsgemäße Glätten der Oberfläche der daraus hergestellten Formteile besonders gut eignen:
Polyester, PA12 (Polyamid 12), PP (Polypropylen), TPU (thermoplastisches Polyurethan), TPE (Thermoplastische Elastomere), PA11 (Polyamid 11), PA6 (Polyamid 6), PA6.6 (Polyamid 6.6), glasgefülltes Polyamid, Keramik gefülltes Polyamid, PU (Polyurethan), ABS (Acrylnitril-Butadien-Styrol-Copolymere), PEK (Polyetherketone), PEI (Polyetherimide), PPS (Polyphenylensulfide) und PLA (Polylactide), Cyanate Ester, Materialien die auf (Meth)acrylaten basieren, sowie Kombinationen hiervon.

Es können aber auch andere Materialien verwendet werden, sofern sie sich für ein 3D-Druckverfahren eignen und sich die Oberfläche der damit hergestellten Formteile mittels eines Lösungsmitteldampfes anlösen lässt.

Als Lösungsmittel haben sich nachfolgend genannte Lösungsmittel (zu denen im Sinne der vorliegenden Erfindung auch Hochsieder zählen) als vorteilhaft herausgestellt, wobei auch andere hier nicht genannte Lösungsmittel verwendet werden können:
Acetaldehyd, Acetamid, Aceton, Acetonitril, Acetophenon, Acetylen, aliphatische Kohlenwasserstoffe, insbesondere Cyclohexan, Cyclohexen, Diisobutylen, Hexan, Octan, n-Pentan und Terpinen, Alkohole, insbesondere Benzylalkohol, Butylenglycol, Butanol, Ethanol, Ethylenglycol, Methanol, Allylalkohol, n-Propanol und Isopropanol, Amylacetat, Anilin, Anisol, Benzin, Benzaldehyd, Benzol, Chlorbenzol, Decalin, Dioxan, Dimethylamid, Diemethylformaid,, Diethylether, Dimethylformamid, Dimehtylsulfid, Dimethylsulfoxid, Ethylbenzol, Ethylacetat, Formaldehyd, Formamid, Furfurol, Halogenkohlenwasserstoffe, insbesondere Chlorbrommethan, Chloroform, Ethylenchlorid, Methylenchlorid, Perchlorethylen, Tetrachlormethan, Trichlorethan und Trichlorethylen, Menthon, Methyl-tert-butylether, Methylethylenketon, Nitrobenzol, Phenole, Phenylethylalkohol, Propanol, Pyridin, Styrol, Tetrahydrofuran, Tetrahydronaphthalin, Toluol, Triethanolamin, sowie Kombinationen hiervon.

Als besonders vorteilhaft haben sich Lösungsmittel erwiesen, die für die Bearbeitung von Kunststoffen für Lebensmittel zugelassen sind (beispielsweise nach der Verordnung (EU) Nr. 10/2011 der Kommission vom 14. Januar 2011 über Materialien und Gegenstände aus Kunststoff, die dazu bestimmt sind, mit Lebensmitteln in Berührung zu kommen), da diese Anwendungen in besonderem Maße von einer geglätteten Oberfläche der Formteile profitieren. Erfindungsgemäß geglättete Oberflächen sind wasserabweisend und unterbinden damit ein mögliches Keimwachstum effizient. Zu dieser Klasse von Lösungsmitteln zählt unter anderem Benzylalkohol.

Die Verwendung von Benzylalkohol bringt darüber hinaus den Vorteil, dass eine Verbreitung des Lösungsmittels unterbunden wird und eine effiziente Entsorgung von etwaigem, austretendem Lösungsmittel durch Handhabungsfehler einfach möglich, da eine schwer-flüchtige Substanz ist. Außerdem weist Benzylalkohol eine sehr geringe Riechgrenze auf, wodurch eine mögliche Lösungsmittelkontamination bereits weit unterhalb des Erreichens der maximalen Arbeitsplatzkonzentration bzw. der gesundheitsgefährdenden Menge, sowie unterhalb der Explosionsgrenze registriert werden kann.

Vor der Behandlung der Oberfläche eines in einem 3D-Druckverfahren hergestellten Formteils kann das Formteil mechanisch aufbereitet werden, etwa gestrahlt werden, um beispielsweise überschüssiges Pulver zu entfernen. Dies ist besonders vorteilhaft, da Pulverreste ebenfalls angelöst würden und anschließend auf der Oberfläche aushärten. Bei zu viel Restpulver auf der Oberfläche kann das Glättergebnis negativ beeinflusst werden.

Zudem können die Formteile vor oder nach dem Glätten mit Kunststoffkugeln gestrahlt werden, um dadurch ein Verdichten der Oberfläche zu erreichen. Vorteilhaft ist es hierbei, wenn die Kunststoffkugeln einen geringeren Härtegrad aufweisen als das Material des Formteils - dadurch wird ein Verdichten der Oberfläche gewährleistet, ohne dass die Oberfläche beschädigt wird.

In einer Ausgestaltung der Erfindung können die Formteile vor oder nach dem Glätten gefärbt werden und/oder nach dem Glätten imprägniert oder lackiert werden.

**Fig. 3** zeigt einen Temperaturverlauf des Innenraumes des druckdichten Behältnisses bzw. des in diesen Innenraum eingebrachten Formteils während einer Durchführung eines erfindungsgemäßen Verfahrens, bei dem drei Zyklen (Schritte S4 bis S5) durchgeführt werden, wobei nach jedem Zyklus die Temperatur des Formteils bzw. die Innentemperatur des Innenraumes ansteigt.

Ein Zyklus kann aber auch ein mehrmaliges Bedampfen der Oberfläche mit dem dampfförmigen Lösungsmittel umfassen, wobei zwischen jedem Bedampfen der Oberfläche die Innentemperatur angepasst werden kann. Bei dem in Fig. 3 gezeigten Temperaturverlauf können die drei gezeigten und nachfolgend beschriebenen Zyklen auch Bestandteil eines einzelnen Zyklus sein. Dies gilt auch für die weiteren mit Bezug auf Fig. 4 bis Fig. 7 gezeigten Temperaturverläufe.

Für das in Fig. 3 gezeigte Beispiel wurde für die Herstellung des Formteils das Material PA12 verwendet. Als Lösungsmittel wurde Benzylalkohol verwendet.

Der Innenraum des druckdichten Behältnisses wird zunächst auf einer ersten Innentemperatur von etwa 130°C gebracht. Zum Zeitpunkt t1 wird das Formteil in den Innenraum gegeben und das druckdichte Behältnis druckdicht verschlossen sowie ein weitgehendes Vakuum im Innenraum erzeugt. Das in den Innenraum gegebene Formteil wird durch die Strahlungswärme des Innenraumes erwärmt, wodurch die erste Innentemperatur gleichzeitig auf eine dritte Innentemperatur, die etwa 108°C beträgt, absinkt. Zum Zeitpunkt t2 entspricht die Temperatur des Formteils weitgehend der dritten Innentemperatur.

Zum Zeitpunkt t3, der unmittelbar nach dem Zeitpunkt t2 liegen kann, wird das auf 130°C erwärmte Lösungsmittel dazugegeben, welches schlagartig verdampft bzw. als Lösungsmitteldampf in den Innenraum des druckdichten Behältnisses eintritt. Der Lösungsmitteldampf kondensiert dann an der Oberfläche des Formteils, da die Temperaturdifferenz zwischen der Temperatur des Formteiles und der Temperatur des Lösungsmitteldampfes etwa 22°C beträgt.

Durch das Hinzugeben des Lösungsmittels steigt die Innentemperatur um etwa 2°C auf eine zweite Innentemperatur (hier ca. 110°C) an. Nachdem diese zweite Innentemperatur erreicht wird, wird die Lösungsmittelzufuhr gestoppt und ein Vakuumtrocknen des Formteiles durchgeführt. Der sich noch im Innenraum befindliche Lösungsmitteldampf kann abgesaugt werden. An den Innwänden des Innenraumes bzw. am Boden des Innenraumes vorhandenes Lösungsmittelkondensat kann ebenfalls abgesaugt werden. Der Trocknungsprozess beträgt dann wenige Sekunden.

Nachdem das Formteil getrocknet ist, wird zum Zeitpunkt t4 erneut Lösungsmittel zugegeben, das nach wie vor eine Temperatur von etwa 130°C aufweist. Da die Temperaturdifferenz zwischen dem Formteil und dem eingebrachten Lösungsmittel nunmehr geringer ist (hier ca. 20°C) als zum Zeitpunkt t3 muss durch Zugabe des Lösungsmittels die zweite Innentemperatur und damit die Temperatur des Formteiles noch weiter erhöht werden (hier auf ca. 115°C), damit an der Oberfläche des Formteiles genügend Lösungsmitteldampf für den gewünschten Glättungseffekt kondensieren kann. Anschließend wird das Formteil wieder vakuumgetrocknet.

Zum Zeitpunkt t5 wird der dritte Zyklus gestartet, in dem erneut auf 130°C erwärmtes Lösungsmittel hinzugegeben wird. Da zum Zeitpunkt t5 die Temperaturdifferenz zwischen der Temperatur des Formteiles und dem zugegebenen Lösungsmittel nochmals kleiner ist (hier ca. 15°C) als zum Zeitpunkt t4 muss durch die Zugabe des Lösungsmittels die zweite Innentemperatur und damit die Temperatur des Formteiles noch weiter erhöht werden, vorliegend auf etwa 120°C. Damit wird erreicht, dass auch in dem dritten Zyklus genügend Lösungsmitteldampf an der Oberfläche des Formteiles für die gewünschte Glättung kondensieren kann. Anschließend wird das Formteil vakuumgetrocknet.

Im Anschluss daran wird zum Zeitpunkt t6 ein Abkühlen des Innenraumes und damit des Formteiles eingeleitet. Nach Erreichen einer bestimmten Innenraumtemperatur, vorliegend bei etwa zwischen 105°C und 110°C kann das Formteil aus dem Innenraum entnommen werden. Dieser Abkühlvorgang ist lediglich optional, d.h. die Formteile können direkt nach dem Trocken entnommen werden. Der Abkühlvorgang hat aber den Vorteil, dass ein Vergilben der entnommen Formteile verhindert wird, da der Abkühlvorgang bei Unterdruck bzw. bei unter Vakuum erfolgt.

Selbstverständlich muss vor Entnahme der Formteile der Innenraum des druckdichten Behältnisses auf Atmosphärendruck gebracht werden.

Die zu erreichende zweite Innentemperatur im zweiten und im dritten Zyklus kann reduziert werden, wenn die Lösungsmitteltemperatur für den zweiten bzw. für den dritten Zyklus entsprechend erhöht wird. So kann beispielsweise eine Erhöhung der Lösungsmitteltemperatur von 130°C auf 135°C im zweiten Zyklus ausreichend sein, dass die zweite Innentemperatur im zweiten Zyklus lediglich von 110°C auf 112°C erhöht werden muss, da in diesem Fall zum Zeitpunkt t4 die Temperaturdifferenz zwischen der Temperatur des Formteils und der Temperatur des Lösungsmittels in etwa gleich groß ist wie zum Zeitpunkt t3. Eine solche Erhöhung der Lösungsmitteltemperatur ist allerdings nur dann möglich, wenn die erhöhte Lösungsmitteltemperatur nicht zu einem zu starken Anlösen oder zu einer Beschädigung der Oberfläche des Formteils führt.

**Fig. 4** zeigt einen Temperaturverlauf der Innentemperatur des Innenraumes, wobei hier nach jedem Zyklus die Innentemperatur des Innenraumes und damit die Temperatur des Formteiles auf einen bestimmten Wert abgekühlt werden.

Für die Herstellung des Formteiles wurde auch hier PA12 verwendet. Als Lösungsmittel wurde auch hier Benzylalkohol verwendet.

Zunächst wird der Innenraum des druckdichten Behältnisses auf eine erste Innentemperatur von etwa 130°C gebracht. Zum Zeitpunkt t1 wird das Formteil in den Innenraum gegeben und der Innenraum druckdicht verschlossen. Im Innenraum wird sodann ein weitgehendes Vakuum erzeugt. Die Temperaturdifferenz zwischen der Temperatur des Formteiles und der ersten Innentemperatur führt hier dazu, dass die erste Innentemperatur bis zum Zeitpunkt t2 auf eine dritte Innentemperatur absinkt und die Temperatur des Formteiles auf diese dritte Innentemperatur (hier ca. 108°C) ansteigt.

Nach Erreichen dieser dritten Innentemperatur wird zum Zeitpunkt t3 ein auf 130°C erwärmtes Lösungsmittel zugegeben, das im Innenraum schlagartig verdampft bzw. das bereits als Lösungsmitteldampf in den Innenraum gelangt. Der Lösungsmitteldampf kondensiert an der Oberfläche des Formteiles und bewirkt dadurch die gewünschte Glättung. Durch das Hinzugeben des Lösungsmittels steigen die Innentemperatur des Innenraumes und damit auch die Temperatur des Formteiles von der dritten Innentemperatur auf die zweite Innentemperatur an (hier ca. 110°C). Sobald diese zweite Innentemperatur erreicht worden ist, wird das Einbringen des Lösungsmittels gestoppt. Anschließend wird das Formteil vakuumgetrocknet.

Nach Abschluss des Trockenvorganges wird der Innenraum abgekühlt, vorzugsweise auf die dritte Innentemperatur, wie zum Zeitpunkt t2 (hier also auf ca. 108°C). Dadurch wird erreicht, dass im nächsten Zyklus die Temperaturdifferenz zwischen der Temperatur des Formteiles und der Temperatur des Lösungsmittels gleich groß ist wie zum Zeitpunkt t3.

Nach dem Abkühlen des Innenraumes bzw. des Formteiles wird zum Zeitpunkt t4 erneut das auf 130°C erwärmte Lösungsmittel dazugegeben. Im Unterschied zu dem in Fig. 3 gezeigten Temperaturverlauf muss die nach dem Zeitpunkt t4 zu erreichende zweite Innentemperatur in diesem zweiten Zyklus nicht höher liegen als im ersten Zyklus. Es ist ausreichend, durch das Zufügen des Lösungsmittels in den Innenraum die zweite Innentemperatur im zweiten Zyklus auf die zweite Innentemperatur wie in dem ersten Zyklus zu bringen (also auf etwa 110°C). Denn aufgrund der Temperaturdifferenz zwischen der Temperatur des Formteiles und der Temperatur des Lösungsmittels zu Beginn des zweiten Zyklus kann ausreichend Dampf an der Oberfläche des Formteiles für die gewünschte Glättung kondensieren. Anschließend wird das Formteil wieder vakuumgetrocknet und die Innentemperatur des Innenraumes wird wieder abgesenkt, vorzugsweise auf die dritte Innentemperatur wie zum Zeitpunkt t2.

Der dritte Zyklus ist identisch zum zweiten Zyklus und wird zum Zeitpunkt t5 durch Zugabe des auf 130°C erwärmten Lösungsmittels eingeleitet.

Zum Zeitpunkt t6 ist der dritte Zyklus abgeschlossen und der Innenraum kann auf eine vorbestimmte Temperatur abgekühlt werden. Anschließend können die Formteile aus dem druckdichten Behältnis entnommen werden. Auf diesen Abkühlvorgang kann aber auch verzichtet werden und die Formteil direkt nach dem Trocken entnommen werden. Der Abkühlvorgang hat aber auch hier die mit Bezug auf Fig. 3 genannten Vorteile.

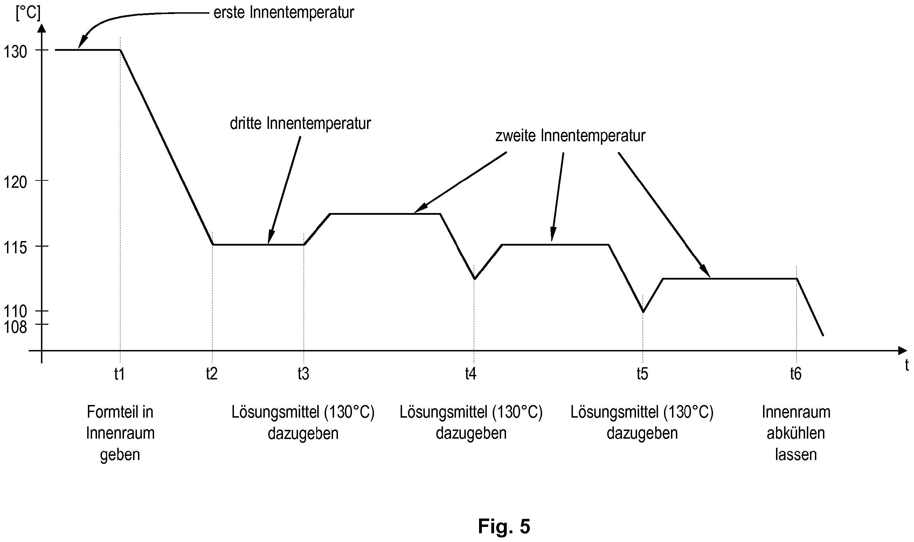

**Fig. 5** zeigt einen Temperaturverlauf der Innentemperatur des Innenraumes, wobei hier nach jedem Zyklus die Innentemperatur des Innenraumes und damit die Temperatur des Formteiles auf einen bestimmten Wert abgekühlt werden.

Für die Herstellung des Formteiles wurde auch hier PA12 verwendet. Als Lösungsmittel wurde auch hier Benzylalkohol verwendet.

Zunächst wird der Innenraum des druckdichten Behältnisses auf eine erste Innentemperatur von etwa 130°C gebracht. Zum Zeitpunkt t1 wird das Formteil in den Innenraum gegeben und der Innenraum druckdicht verschlossen. Im Innenraum wird sodann ein weitgehendes Vakuum erzeugt. Die Temperaturdifferenz zwischen der Temperatur des Formteiles und der ersten Innentemperatur führt hier dazu, dass die erste Innentemperatur bis zum Zeitpunkt t2 auf eine dritte Innentemperatur absinkt und die Temperatur des Formteiles auf diese dritte Innentemperatur (hier ca. 115°C) ansteigt.

Nach Erreichen dieser dritten Innentemperatur wird zum Zeitpunkt t3 ein auf 130°C erwärmtes Lösungsmittel zugegeben, das im Innenraum schlagartig verdampft bzw. das bereits als Lösungsmitteldampf in den Innenraum gelangt. Der Lösungsmitteldampf kondensiert an der Oberfläche des Formteiles und bewirkt dadurch die gewünschte Glättung. Durch das Hinzugeben des Lösungsmittels steigen die Innentemperatur des Innenraumes und damit auch die Temperatur des Formteiles von der dritten Innentemperatur (hier ca. 115°C) auf die zweite Innentemperatur an (hier ca. 117,5°C), also um ca. 2,5°C. Sobald diese zweite Innentemperatur erreicht worden ist, wird das Einbringen des Lösungsmittels gestoppt. Anschließend wird das Formteil vakuumgetrocknet.

Nach Abschluss des Trockenvorganges wird der Innenraum abgekühlt. Während bei dem in Fig. 4 gezeigten Beispiel die Temperatur des Innenraumes auf die Temperatur wie zum Zeitpunkt t2 abgesenkt wurde, wird bei dem in Fig. 5 gezeigten Beispiel die Temperatur des Innenraumes auf eine Temperatur unterhalb der Temperatur wie zum Zeitpunkt t2 abgesenkt (hier um ca. 5°C auf 112,5°C). Dadurch wird erreicht, dass zu Beginn des nächsten Zyklus die Temperaturdifferenz zwischen der Temperatur des Formteiles und der Temperatur des Lösungsmittels größer ist zu Beginn des vorhergehenden Zyklus (zum Zeitpunkt t3).

Nach dem Abkühlen des Innenraumes bzw. des Formteiles wird zum Zeitpunkt t4 erneut das auf 130°C erwärmte Lösungsmittel dazugegeben. Im Unterschied zu dem in Fig. 4 gezeigten Temperaturverlauf kann die nach dem Zeitpunkt t4 zu erreichende zweite Innentemperatur in diesem zweiten Zyklus niedriger sein (hier ca. 115°C) als im ersten Zyklus. Denn aufgrund der größeren Temperaturdifferenz zum Zeitpunkt t4 zwischen der Temperatur des Formteiles und der Temperatur des Lösungsmittels kann dennoch ausreichend Dampf an der Oberfläche des Formteiles für die gewünschte Glättung kondensieren. Anschließend wird das Formteil wieder vakuumgetrocknet und die Innentemperatur des Innenraumes wird wieder abgesenkt (hier auf ca. 110°C).

Der dritte Zyklus ist identisch zum zweiten Zyklus und wird zum Zeitpunkt t5 durch Zugabe des auf 130°C erwärmten Lösungsmittels eingeleitet, wodurch die zweite Innentemperatur auf etwa 112°C ansteigt.

Zum Zeitpunkt t6 ist der dritte Zyklus abgeschlossen und der Innenraum kann auf eine vorbestimmte Temperatur abgekühlt werden. Anschließend können die Formteile aus dem druckdichten Behältnis entnommen werden. Auf diesen Abkühlvorgang kann aber auch verzichtet werden und die Formteil direkt nach dem Trocken entnommen werden. Der Abkühlvorgang hat aber auch hier die mit Bezug auf Fig. 3 genannten Vorteile.

Vorteilhaft ist hierbei, dass durch das stetige Abkühlen die Oberfläche des Formteils in jedem Zyklus weniger stark angelöst wird, wodurch eine schonendere Glättung erreicht wird. Die höheren Temperaturen im ersten Zyklus haben den Vorteil, dass eine schnelle erste Glättung erreicht wird.

Vorteilhaft kann es auch sein, die Temperatur des Lösungsmittels nach jedem Zyklus zu reduzieren, beispielsweise um 2°C bis 5°C. Das gilt auch für die mit Bezug auf Fig. 3, Fig. 4, Fig. 6 und Fig. 7 gezeigten Varianten.

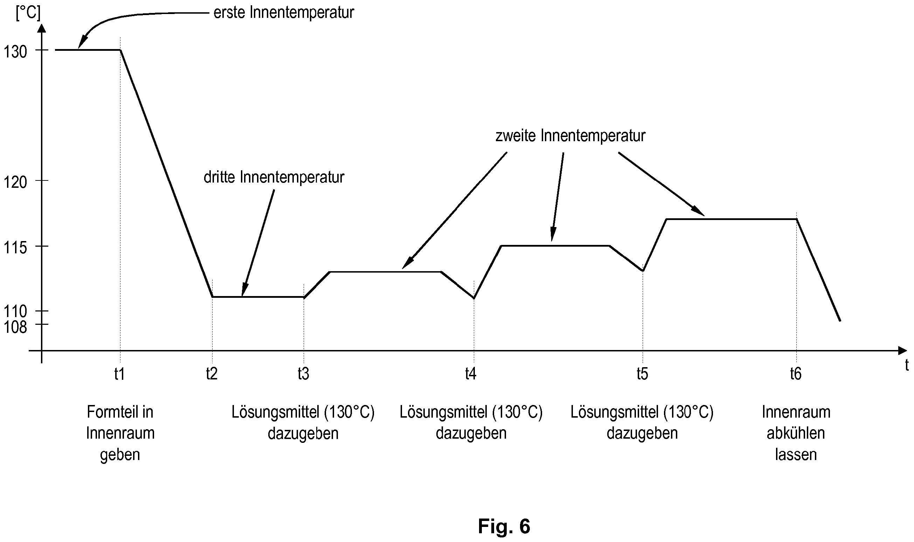

**Fig. 6** zeigt einen Temperaturverlauf der Innentemperatur des Innenraumes, wobei hier nach jedem Zyklus die Innentemperatur des Innenraumes und damit die Temperatur des Formteiles auf einen bestimmten Wert abgekühlt werden, im Unterschied zu dem in Fig. 5 gezeigten Temperaturverlauf die zweite Innentemperatur im jeden Zyklus höher ist als bei dem vorhergehenden Zyklus.

Für die Herstellung des Formteiles wurde auch hier PA12 verwendet. Als Lösungsmittel wurde auch hier Benzylalkohol verwendet.

Zunächst wird der Innenraum des druckdichten Behältnisses auf eine erste Innentemperatur von etwa 130°C gebracht. Zum Zeitpunkt t1 wird das Formteil in den Innenraum gegeben und der Innenraum druckdicht verschlossen. Im Innenraum wird sodann ein weitgehendes Vakuum erzeugt. Die Temperaturdifferenz zwischen der Temperatur des Formteiles und der ersten Innentemperatur führt hier dazu, dass die erste Innentemperatur bis zum Zeitpunkt t2 auf eine dritte Innentemperatur absinkt und die Temperatur des Formteiles auf diese dritte Innentemperatur (hier ca. 111°C) ansteigt.

Nach Erreichen dieser dritten Innentemperatur wird zum Zeitpunkt t3 ein auf 130°C erwärmtes Lösungsmittel zugegeben, das im Innenraum schlagartig verdampft bzw. das bereits als Lösungsmitteldampf in den Innenraum gelangt. Der Lösungsmitteldampf kondensiert an der Oberfläche des Formteiles und bewirkt dadurch die gewünschte Glättung. Durch das Hinzugeben des Lösungsmittels steigen die Innentemperatur des Innenraumes und damit auch die Temperatur des Formteiles von der dritten Innentemperatur (hier ca. 111°C) auf die zweite Innentemperatur an (hier ca. 113°C), also um ca. 2°C. Sobald diese zweite Innentemperatur erreicht worden ist, wird das Einbringen des Lösungsmittels gestoppt. Anschließend wird das Formteil vakuumgetrocknet.

Nach Abschluss des Trockenvorganges wird der Innenraum abgekühlt (hier um ca. 2°C auf ca. 111°C). Dadurch wird erreicht, dass zu Beginn des nächsten Zyklus die Temperaturdifferenz zwischen der Temperatur des Formteiles und der Temperatur des Lösungsmittels etwa gleich groß ist, wie zu Beginn des vorhergehenden Zyklus (zum Zeitpunkt t3).

Nach dem Abkühlen des Innenraumes bzw. des Formteiles wird zum Zeitpunkt t4 erneut das auf 130°C erwärmte Lösungsmittel dazugegeben. Im Unterschied zu dem in Fig. 5 gezeigten Temperaturverlauf kann die nach dem Zeitpunkt t4 zu erreichende zweite Innentemperatur in diesem zweiten Zyklus höher sein (hier ca. 115°C) als im ersten Zyklus. Anschließend wird das Formteil wieder vakuumgetrocknet und die Innentemperatur des Innenraumes wird wieder abgesenkt (hier um etwa 2°C auf ca. 113°C).

Der dritte Zyklus ist identisch zum zweiten Zyklus und wird zum Zeitpunkt t5 durch Zugabe des auf 130°C erwärmten Lösungsmittels eingeleitet, wodurch die zweite Innentemperatur auf etwa 117°C ansteigt.

Zum Zeitpunkt t6 ist der dritte Zyklus abgeschlossen und der Innenraum kann auf eine vorbestimmte Temperatur abgekühlt werden. Anschließend können die Formteile aus dem druckdichten Behältnis entnommen werden. Auf diesen Abkühlvorgang kann aber auch verzichtet werden und die Formteil direkt nach dem Trocken entnommen werden. Der Abkühlvorgang hat aber auch hier die mit Bezug auf Fig. 3 genannten Vorteile.

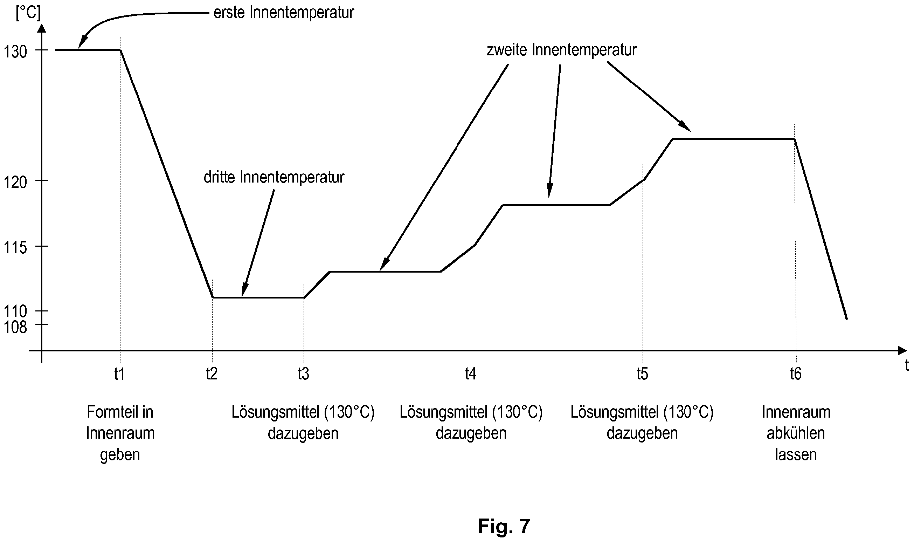

**Fig. 7** zeigt einen Temperaturverlauf der Innentemperatur des Innenraumes, wobei hier nach jedem Zyklus die Innentemperatur des Innenraumes und damit die Temperatur des Formteiles weiter erwärmt wird.

Für die Herstellung des Formteiles wurde auch hier PA12 verwendet. Als Lösungsmittel wurde auch hier Benzylalkohol verwendet.

Zunächst wird der Innenraum des druckdichten Behältnisses auf eine erste Innentemperatur von etwa 130°C gebracht. Zum Zeitpunkt t1 wird das Formteil in den Innenraum gegeben und der Innenraum druckdicht verschlossen. Im Innenraum wird sodann ein weitgehendes Vakuum erzeugt. Die Temperaturdifferenz zwischen der Temperatur des Formteiles und der ersten Innentemperatur führt hier dazu, dass die erste Innentemperatur bis zum Zeitpunkt t2 auf eine dritte Innentemperatur absinkt und die Temperatur des Formteiles auf diese dritte Innentemperatur (hier ca. 111°C) ansteigt.

Nach Erreichen dieser dritten Innentemperatur wird zum Zeitpunkt t3 ein auf 130°C erwärmtes Lösungsmittel zugegeben, das im Innenraum schlagartig verdampft bzw. das bereits als Lösungsmitteldampf in den Innenraum gelangt. Der Lösungsmitteldampf kondensiert an der Oberfläche des Formteiles und bewirkt dadurch die gewünschte Glättung. Durch das Hinzugeben des Lösungsmittels steigen die Innentemperatur des Innenraumes und damit auch die Temperatur des Formteiles von der dritten Innentemperatur (hier ca. 111°C) auf die zweite Innentemperatur an (hier ca. 113°C), also um ca. 2°C. Sobald diese zweite Innentemperatur erreicht worden ist, wird das Einbringen des Lösungsmittels gestoppt. Anschließend wird das Formteil vakuumgetrocknet.

Nach Abschluss des Trockenvorganges wird der Innenraum (und damit das Formteil) weiter erwärmt (hier um ca. 2°C auf ca. 115°C).

Nach dem Erwärmen des Innenraumes bzw. des Formteiles wird zum Zeitpunkt t4 erneut das auf 130°C erwärmte Lösungsmittel dazugegeben. Die zweite Innentemperatur steigt dadurch auf um etwa 3°C auf ca. 118°C. Anschließend wird das Formteil wieder vakuumgetrocknet und die Innentemperatur des Innenraumes wird wieder weiter erwärmt (hier um etwa 2°C auf ca. 120°C).

Der dritte Zyklus ist identisch zum zweiten Zyklus und wird zum Zeitpunkt t5 durch Zugabe des auf 130°C erwärmten Lösungsmittels eingeleitet, wodurch die zweite Innentemperatur auf etwa 123°C ansteigt.

Zum Zeitpunkt t6 ist der dritte Zyklus abgeschlossen und der Innenraum kann auf eine vorbestimmte Temperatur abgekühlt werden. Anschließend können die Formteile aus dem druckdichten Behältnis entnommen werden.

Bei den mit Bezug auf Fig. 3 bis Fig. 7 gezeigten Beispielen eines Temperaturverlaufes wurde jeweils drei Zyklen (Bedampfen der Oberfläche und anschließendes Trocknen) durchgeführt. Je nach gewünschter Glätte und abhängig vom Material des Formteils sowie vom verwendeten Lösungsmittel können auch mehr als drei oder weniger als drei Zyklen durchgeführt werden.

Bei den mit Bezug auf Fig. 3 bis Fig. 7 gezeigten Beispielen eines Temperaturverlaufes wurde zunächst die Innentemperatur des druckdichten Behältnisses auf eine vorbestimmte erste Innentemperatur (hier 130°C) gebracht, bevor das (kalte) Formteil in den Innenraum eingebracht wurde (zum Zeitpunkt t1).

Alternativ hierzu kann das Formteil aber auch in den "kalten" Innenraum eingebracht werden und anschließend kann der Innenraum auf die gewünschte erste Innentemperatur gebracht werden (z.B. auf 130°C). Bei mit Bezug auf Fig. 3 bis Fig. 7 gezeigten Beispielen, wäre es hierbei ausreichend, den Innenraum (samt des darin eingebrachten kalten Formteils) auf eine erste Innentemperatur zu bringen, bei der ein anschließendes Absenken auf eine dritte Innentemperatur nicht mehr notwendig ist. So kann beispielsweise bei dem in Fig. 3 gezeigten Beispiel der Innenraum mit dem darin angeordneten Formteil solange erwärmt werden, bis eine Temperatur von etwa 108°C erreicht wird. Anschließend kann dann direkt das Lösungsmittel zugegeben werden. Hierbei ist er vorteilhaft, das Erwärmen des Innenraumes und damit des Formteils unter Vakuum durchzuführen.

Bei den mit Bezug auf Fig. 3 bis Fig. 7 gezeigten Beispielen wurde in jedem Zyklus das gleiche Lösungsmittel zugegeben. Alternativ hierzu kann zumindest in einem Zyklus ein anderes Lösungsmittel zugegeben als in den anderen Zyklen. So kann etwa bei Formteilen mit besonders grobporigen Oberflächen in dem ersten Zyklus ein Lösungsmittel zugegeben werden, das ein schnelles und/oder stärkeres Anlösen der Oberfläche bewirkt. Damit können auch größere Poren verschlossen werden. In den nachfolgenden Zyklen kann dann jeweils ein Lösungsmittel zugegeben werden, mit dem die Oberfläche dann nur mehr leicht und/oder langsamer angelöst wird.

Bei den in Fig. 3, Fig. 6 und Fig. 7 gezeigten Beispielen steigt die zweite Innentemperatur mit jedem Zyklus sukzessive an. Bei dem in Fig. 4 gezeigten Beispiel bleibt die zweite Innentemperatur über mehrere Zyklen hinweg konstant. Bei dem in Fig. 5 gezeigten Beispiel fällt die zweite Innentemperatur mit jedem Zyklus sukzessive ab.

Die in Fig. 3 bis Fig. 7 gezeigten Temperaturverläufe können auch kombiniert werden. D.h., das erfindungsgemäße Verfahren kann auch so durchgeführt werden, dass die zweite Innentemperatur in zwei oder mehr aufeinanderfolgenden Zyklen steigt bzw. fällt und in auf diese Zyklen folgenden Zyklen fällt bzw. steigt. Damit kann der Temperaturverlauf abhängig von den Materialien der Formteile und abhängig von dem verwendeten Lösungsmittel optimal an die zu erzielende Oberflächenglätte angepasst werden, insbesondere dann, wenn in zwei oder mehrere verschiedene Lösungsmittel zum Einsatz kommen.

Die vorstehend mit Bezug auf Fig. 3 bis Fig. 7 beschriebenen Versuche wurden für
- TPU als Material des Formteils und Benzylalkohol als Lösungsmittel, und
- PA12 als Material des Formteils und Methylenchlorid als Lösungsmittel wiederholt.

Beispiel: TPU als Material des Formteils und Benzylalkohol als Lösungsmittel:
Da TPU einen niedrigeren Schmelzpunkt hat als PA12, mussten die in den Fig. 3 bis Fig. 7 gezeigten Temperaturen um jeweils etwa 15°C reduziert werden.

Beispiel: PA12 als Material des Formteils und Methylenchlorid als Lösungsmittel:
Die Temperaturen der in den Fig. 3 bis Fig. 7 gezeigten Temperaturverläufe liegen hier bei etwa zwischen 20°C und 40°C. Konkret wurde in einem Versuch ein Formteil aus PA12 mit dem in Fig. 3 gezeigten Temperaturverlauf durchgeführt, wobei die Temperatur zum Zeitpunkt t2 bei etwa 20°C lag, und die zweite Innentemperatur beim ersten Zyklus bei etwa 23°C, beim zweiten Zyklus bei etwa 29°C und beim dritten Zyklus bei etwa 35°C. Der Druck im Innenraum des druckdichten Behältnisses wurde auf unterhalb des Atmosphärendruckes eingestellt (konkret auf etwa 450 hPa). Dieser leichte Unterdruck ist ausreichend, damit Methylenchlorid im Innenraum bereits bei etwa 20°C verdampfen kann.

Nachfolgend werden zwei weitere Versuche beschrieben.

### Versuch 1:

Die Formteile werden mit dem Polyamid PA2200 in einem 3D-Druckverfahren hergestellt.

Der Innenraum 21 des druckdichten Behältnisses wird auf eine Temperatur von 135°C erwärmt (Schritt S1, erste Innenraumtemperatur).

Die Formteile werden in den Innenraum 21 eingebracht (Schritt S2) und in dem Innenraum 21 wird ein weitgehendes Vakuum (etwa 7 mbar) erzeugt. Durch das Öffnen und Schließen der Prozesskammer während des Einbringens der Formteile in den Innenraum, kühlt der Innenraum wieder etwas ab (auf etwa 125°C, 3. Innentraumtemperatur).

Lösungsmittelbehältnis wird mit Benzylalkohol als Lösungsmittel gefüllt. Vor oder während der Schritte S1 und S2 wird das Lösungsmittels auf eine Temperatur von etwa 140°C erwärmt (Schritt S3), wobei im Lösungsmittelbehältnis ein Druck von 130 mbar erreicht wird. Aufgrund der Dampfdruckkurve von Benzylalkohol wird damit erreicht, dass ein Teil des Lösungsmittels verdampft.

Durch Öffnen des Ventils 50 für eine Dauer von etwa 16 s und die Druckdifferenz zwischen Innenraum 21 und Lösungsmittelbehälter 40 strömt Lösungsmittel im Schritt S4 in den Innenraum 21 ein und kondensiert an den Formteilen, da diese eine geringere Temperatur aufweisen, als der einströmende Dampf. Dabei fällt der Druck in dem Lösungsmittelbehälter 40 auf etwa 100 mbar ab, während der Druck in dem Innenraum 21 auf etwa 80 mbar ansteigt. Gleichzeitig erhöht sich die Temperatur in dem Innenraum 21 auf etwa 126°C (2. Innenraumtemperatur).

Anschließend wird das Lösungsmittel aus dem Innenraum 21 abgesaugt (Schritt S4.1) und das Formteil im Vakuum getrocknet (Schritt S5). Dabei sinkt die Temperatur in dem Innenraum 21 bedingt durch die Verdunstung des Lösungsmittels auf eine Temperatur unterhalb der 2. Innenraumtemperatur (<126 °C), wobei die Temperatur auch unterhalb die 3. Innenraumtemperatur fallen kann (<125 °C). Dadurch wird sichergestellt, dass die Temperatur des Lösungsmitteldampfes immer über der Temperatur des Innenraums 21 liegt und damit auch über der Temperatur der zu glättenden Formteile. Damit kann auch in den folgenden Bedampfungszyklen sichergestellt werden, dass Lösungsmittel an der Oberfläche der Formteile kondensiert und diese weiter geglättet werden.

Die Schritte S4, S4.1 und S5 werden anschließend 18 Mal wiederholt, ehe das Bauteil final getrocknet wird.

### Versuch 2:

Die Formteile werden mit einem thermoplastischen Polyurethan (TPU) in einem 3D-Druckverfahren hergestellt.

Der Innenraum 21 des druckdichten Behältnisses wird auf eine Temperatur von etwa 130°C erwärmt (Schritt S1, erste Innenraumtemperatur).

Die Formteile werden in den Innenraum 21 eingebracht (Schritt S2) und in dem Innenraum 21 wird ein weitgehendes Vakuums (etwa 8 mbar) erzeugt. Durch das Öffnen und Schließen der Prozesskammer 20, kühlt der Innenraum 21 bei diesem Prozessschritt wieder etwas ab.

Anschließend verweilen die Formteile für 30 Minuten in der vorgewärmten, evakuierten Kammer. Dies hat den Vorteil, dass die Formteile schonend erwärmt werden und dadurch der thermische Stress, der beim Einströmen des heißen Lösungsmitteldampfes ausgelöst wird, auf ein Minimum reduziert werden kann. Gleichzeitig ermöglicht dies ein schonendes Entweichen von möglicherweise im Material gebundenem Wasser und reduziert beim späteren Bedampfen die Menge an kondensiertem Lösungsmittel. Dadurch keine eine Blasenbildung durch Verkochen der Oberfläche verhindert werden. Nach dieser Zeit ist der Innenraum 21 auf eine Temperatur von 105°C (3. Innenraumtemperatur) abgekühlt.

Das Lösungsmittelbehältnis 40 wird mit Benzylalkohol als Lösungsmittel gefüllt. Vor oder während der Schritte S1 und S2 wird das Lösungsmittels auf eine Temperatur von etwa 135°C erwärmt (Schritt S3), wobei im Innenraum 70 ein Druck von etwa 120 mbar erreicht wird. Aufgrund der Dampfdruckkurve von Benzylalkohol wird damit erreicht, dass ein Teil des Lösungsmittels verdampft.

Durch Öffnen des Ventils 50 für eine Dauer von etwa 25 s und die Druckdifferenz zwischen Innenraum 21 und Innenraum 70 strömt Lösungsmittel im Schritt S4 in den Innenraum 21 ein und kondensiert an den Formteilen, da diese eine geringere Temperatur aufweisen als der einströmende Lösemitteldampf. Dabei fällt der Druck in dem Lösungsmittelbehälter 40 auf etwa 90 mbar ab, während der Druck in dem Innenraum 21 auf etwa 70 mbar ansteigt. Gleichzeitig erhöht sich die Temperatur in dem Innenraum 21 auf etwa 110°C (2. Innenraumtemperatur).

Anschließend wird das Lösungsmittel abgesaugt (Schritt S4.1) und das Bauteil im Vakuum getrocknet (Schritt S5). Dabei sinkt die Temperatur in dem Innenraum 21 bedingt durch die Verdunstung des Lösungsmittels auf eine Temperatur unterhalb der 2. Innenraumtemperatur (<110 °C).

Anschließend wird die Temperatur im Innenraum 21 reduziert, was beispielsweise durch ein kurzzeitiges Öffnen der Behältnisses 20 gefolgt von einem erneuten Schließen des Behältnisses 20 und Evakuieren des Innenraumes 21 erreicht werden kann. Damit wird eine Temperatur unterhalb der 2. Innenraumtemperatur, bevorzugt genau die 3. Innenraumtemperatur erreicht.

Die Schritte S4, S4.1 und S5 werden anschließend 2 Mal wiederholt, ehe das Bauteil final getrocknet wird.

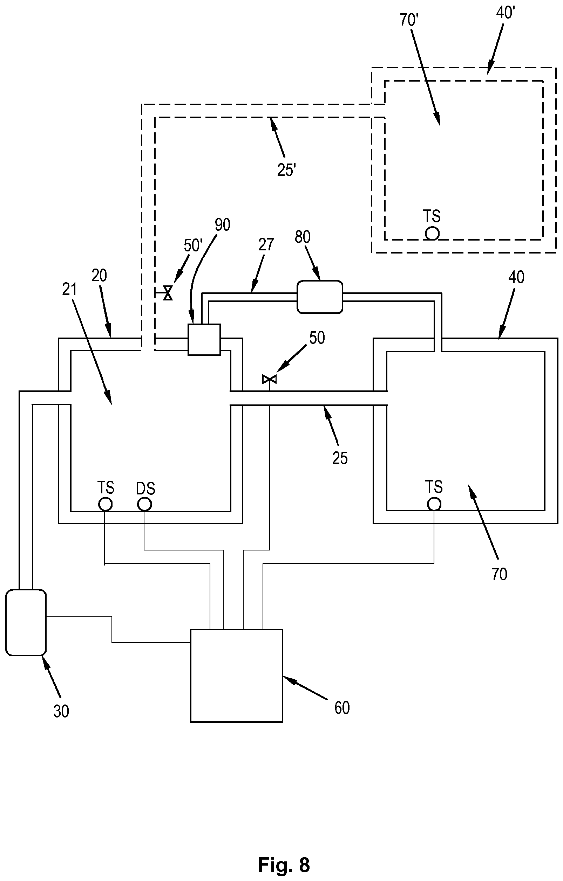

**Fig. 8** zeigt in schematischer Weise eine erfindungsgemäße Vorrichtung zum Behandeln einer Oberfläche zumindest eines in einem 3D-Druckverfahren hergestellten Formteils.

Die Vorrichtung umfasst im Wesentlichen ein druckdichtes Behältnis 20 in dessen Innenraum 21 das zu behandelnde Formteil eingebracht wird. Das druckdichte Behältnis 20 ist so ausgestaltet, dass in dem Innenraum 21 ein Unterdruck, insbesondere ein weitgehendes Vakuum erzeugt werden kann.

Ferner umfasst die Vorrichtung ein Lösungsmittelbehältnis 40 zur Bevorratung des in den Innenraum 21 einzubringenden Lösungsmittels 70. Das Lösungsmittelbehältnis 40 ist ebenfalls druckdicht ausgestaltet.

Das Lösungsmittelbehältnis 40 und das druckdichte Behältnis 20 sind über eine Zuleitung 25 miteinander verbunden, wobei in der Zuleitung ein Ventil 50 angeordnet sein kann, mit dem die Zufuhr von Lösungsmittel aus dem Lösungsmittelbehältnis 40 in den Innenraum 21 des Behältnisses 20 gesteuert werden kann.

Das druckdichte Behältnis 20 und das Lösungsmittelbehältnis 40 sind jeweils so ausgestaltet, dass einerseits der Innenraum 21 des druckdichten Behältnisses 20 und andererseits das sich in dem Lösungsmittelbehältnis 40 befindliche Lösungsmittel 70 jeweils auf eine vorbestimmte Temperatur erwärmt werden können. Hierzu können beispielsweise (in Fig. 8 nicht gezeigte) Heizmanschetten oder Mantelheizungen an dem jeweiligen Behältnis 20, 40 angeordnet werden. Andere Heizeinrichtungen sind möglich.

Zur Steuerung der Temperaturen in dem Innenraum und des Lösungsmittels können entsprechende Temperatursensoren TS vorgesehen sein, die mit einer Steuer-/Regeleinrichtung 60 gekoppelt sind. Abhängig von den erfassten Temperaturmesswerten kann die Steuer-/Regeleinrichtung 60 die Zufuhr von Wärmeenergie zum Erwärmen des Innenraumes 21 bzw. zum Erwärmen des Lösungsmittels 70 steuern.

Ferner kann das druckdichte Behältnis 20 einen Drucksensor DS aufweisen, mit dem die Druckverhältnisse im Innenraum 21 überwacht werden können. Dieser Drucksensor DS ist ebenfalls mit der Steuer-/Regeleinrichtung 60 gekoppelt.

Die Steuer-/Regeleinrichtung 60 kann zudem eine Vakuumpumpe 30 steuern, mit der im Innenraum 21 des druckdichten Behältnisses 20 ein Unterdruck bzw. ein Vakuum erzeugt werden kann.

Zudem ist die Steuer-/Regeleinrichtung 60 mit dem Ventil 50 gekoppelt, sodass die Steuer-/Regeleinrichtung 60 in Abhängigkeit von der Temperatur im Innenraum 21 das Ventil 50 steuern kann.

In einer besonderen Ausgestaltung der erfindungsgemäßen Vorrichtung kann diese eine oder mehrere weitere Lösungsmittelbehältnisse 40' aufweisen, die jeweils über eine Zuleitung 25' mit dem druckdichten Behältnis 20 verbunden sind und die ebenfalls druckdicht ausgestaltet sein können. Die Zuleitungen 25' können jeweils ein Ventil 50' aufweisen, mit dem die Zufuhr von Lösungsmittel aus dem jeweiligen Lösungsmittelbehältnis 40' in den Innenraum 21 des Behältnisses 20 gesteuert werden kann.

Ferner können auch die Lösungsmittelbehältnisse 40, 40' jeweils einen Drucksensor DS aufweisen (in Fig. 8 nicht gezeigt), mit dem die Druckverhältnisse in den jeweiligen Innenräume 70, 70' überwacht werden können. Diese Drucksensoren DS sind ebenfalls mit der Steuer-/Regeleinrichtung 60 gekoppelt.

In jedem der Lösungsmittelbehältnisse 40, 40' kann ein anderes Lösungsmittel gespeichert werden, was insbesondere dann vorteilhaft ist, wenn für einen Zyklus ein anderes Lösungsmittel verwendet werden soll als für die anderen Zyklen.

In den Lösungsmittelbehältnissen 40, 40' kann aber auch das gleiche Lösungsmittel gespeichert werden. Dies ist beispielsweise dann vorteilhaft, wenn dieses Lösungsmittel in zwei verschiedenen Zyklen mit einer unterschiedlichen Temperatur dem Innenraum 21 zugeführt werden soll. Das Lösungsmittel in dem Lösungsmittelbehältnis 40 kann so auf eine andere Temperatur erwärmt werden als das in dem Lösungsmittelbehältnis 40' gespeichert Lösungsmittel.

Besonders vorteilhaft ist es, wenn das druckdichte Behältnis 21 mit einer Absaugeinrichtung 90 gekoppelt ist, die ihrerseits über eine Rückleitung 27 mit dem Lösungsmittelbehältnis 40 gekoppelt ist. Die Absaugeinrichtung 90 ist angepasst, den im Innenraum 21 vorhandenen Lösungsmitteldampf und/oder das an den Innenwänden des Innenraumes vorhandene Lösungsmittelkondensat abzusaugen und über die Rückleitung 27 wieder dem Lösungsmittelbehältnis 40 zuzuführen. Damit kann das Lösungsmittel optimal ausgenutzt werden, was einerseits die Kosten für das erfindungsgemäße Glätten senkt und andererseits die Umwelt schont.

Der abgesaugte Lösungsmitteldampf bzw. das abgesaugte Lösungsmittelkondensat können kann vor dem Zuführen zum Lösungsmittelbehältnis 40 aufbereitet werden, insbesondere gereinigt und/oder destilliert werden. Hierzu kann in der Rückführleitung 27 eine Reinigungs- und/oder Destilliereinrichtung 80 vorgesehen sein. Das Destillieren des abgesaugten Lösungsmitteldampfes bzw. des abgesaugten Lösungsmittelkondensats hat sich als besonders vorteilhaft erwiesen, sodass es erfindungsgemäß besonders vorteilhaft ist, destillierbares Lösungsmittel zu verwenden.

Für die weiteren Lösungsmittelbehältnisse 40' können ebenfalls entsprechende Rückleitungen mit entsprechenden Reinigungs- und/oder Destilliereinrichtungen vorgesehen sein, die in Fig. 8 nicht gezeigt sind.

Das erfindungsgemäße Verfahren und die erfindungsgemäße Vorrichtung zur Durchführung des Verfahrens hat den Vorteil, dass ein Glätten der Oberflächen der Formteile besonders zeiteffizient durchgeführt werden kann, sodass sich das Verfahren auch für ein Oberflächenglätten im industriellen Maßstab eignet. Das Bedampfen in dem jeweiligen Zyklus dauert lediglich wenige Sekunden, da dieser Zeitraum ausreicht, um ausreichend Lösungsmitteldampf in dem Innenraum des druckdichten Behältnisses einströmen zu lassen, mit dem der gewünschte Glättungseffekt in einem Zyklus erreicht wird. Das Vakuumtrocknen dauert ebenfalls nur wenige Sekunden, insbesondere wenn der noch in dem Innenraum vorhandene Lösungsmitteldampf und das sich an den Innenwänden und am Boden des Innenraumes gebildete Lösungsmittelkondensat abgesaugt werden. Damit kann ein Zyklus innerhalb weniger Sekunden durchgeführt werden.

Zudem eignet sich das erfindungsgemäße Verfahren insbesondere auch für flexible Formteile, dessen Oberflächen nicht oder nur unter erheblichem Aufwand mechanisch geglättet werden können.

Versuche haben gezeigt, dass mit dem erfindungsgemäßen Verfahren geglättete Oberflächen erzeugt werden können, die sich von Oberflächen von Formteilen, die im Spritzgussverfahren hergestellt wurden, praktisch nicht unterscheiden.

Ein wesentlicher Vorteil der Erfindung liegt jedoch darin, dass durch das erfindungsgemäße Glätten die Formteile eine hochgradig homogene Oberfläche aufweisen, die besonders dann vorteilhaft ist, wenn die Formteile anschließend gefärbt werden. Die durch das erfindungsgemäße Verfahren erreichte homogene Oberfläche der Formteile führt dazu, dass Farben über die gesamte Oberfläche gleich gut aufgenommen werden, sodass sich ein homogenes Farbbild ergibt. Insbesondere wird eine Fleckenbildung effizient verhindert.

### Bezugszeichen:

- 10: Formteil
- 11: Oberfläche des Formteils 10
- 20: druckdichtes Behältnis
- 21: Innenraum des druckdichten Behältnisses 20
- 25, 25': Zuleitung
- 27: Rückleitung
- 30: Vakuumpumpe
- 40, 40': Lösungsmittelbehältnis

- 50, 50': Ventil
- 60: Steuer-/Regeleinrichtung
- 70, 70': Lösungsmittel bzw. Innenraum des Lösungsmittelbehältnisses 40, 40'
- 80: Reinigungs-/Destilliereinrichtung
- 90: Absaugeinrichtung
- DS: Drucksensor
- S1 - S6: Schritte des Verfahrens
- TS: Temperatursensor

## Patentansprüche

1. Verfahren zum Behandeln einer Oberfläche zumindest eines in einem 3D-Druckverfahren hergestellten Formteils (10), wobei:
(a) das Formteil (10) in einen Innenraum (21) eines druckdichten Behältnisses (20) eingebracht wird,
(b) nach dem Einbringen des Formteils (10) in das Behältnis (20), im Innenraum (21) des Behältnisses ein Unterdruck erzeugt wird,
(c) ein Lösungsmittel bis auf eine vorbestimmte Lösungsmitteltemperatur erwärmt wird, und
(d) nach dem Einbringen des Formteils (10) in den Innenraum (21) des Behältnisses (20) das erwärmte Lösungsmittel aus einem Lösungsmittelbehältnis (40) in den den Unterdruck aufweisenden Innenraum (21) eingebracht wird, wobei das Lösungsmittelbehältnis (40) druckdicht ausgestaltet ist und wobei vor dem Einbringen des Lösungsmittels aus dem Lösungsmittelbehältnis (40) in den Innenraum (21) des druckdichten Behältnisses (20) im Innenraum des Lösungsmittelbehältnisses (40) ein Unterdruck, insbesondere weitgehendes Vakuum, erzeugt wird,
wobei
- die Temperatur des Formteils (10) niedriger ist als die Lösungsmitteltemperatur, und
- beim Einbringen des Lösungsmittels in den Innenraum (21) das Lösungsmittel verdampft oder das Lösungsmittel als Lösungsmitteldampf in den Innenraum (21) eingebracht wird, wobei der Lösungsmitteldampf an der Oberfläche des Formteils (10) kondensiert.

2. Verfahren nach dem vorhergehenden Anspruch, wobei nach dem Einbringen des Formteils (10) in das Behältnis (20) im Innenraum (21) des Behältnisses ein weitgehendes Vakuum erzeugt wird, oder wobei nach dem Einbringen des Formteils (10) in das Behältnis (20) im Innenraum (21) des Behältnisses ein Unterdruck erzeugt wird, der kleiner als 10 mbar ist.

3. Verfahren nach einem der vorhergehenden Ansprüche, wobei vor dem Schritt (a) oder nach dem Schritt (a) der Innenraum (21) des druckdichten Behältnisses (20) auf eine vorbestimmte erste Innentemperatur gebracht wird.

4. Verfahren nach dem vorhergehenden Anspruch, wobei durch das Einbringen des Lösungsmittels in den Innenraum (21) (Schritt (d)) die Temperatur des Innenraumes auf eine vorbestimmte zweite Innentemperatur gebracht wird, wobei
- solange Lösungsmittel in den Innenraum eingebracht wird, bis vorbestimmte zweite Innentemperatur erreicht ist, oder
- über einen vorbestimmten Zeitraum Lösungsmittel in den Innenraum eingebracht wird, wobei nach dem vorbestimmten Zeitraum die vorbestimmte zweite Innentemperatur erreicht wird.

5. Verfahren nach einem der Ansprüche 1 bis 3, wobei über einen Zeitraum von zwischen 1 s und 600 s, vorzugweise von zwischen 5 s und 300 s, Lösungsmittel in den Innenraum (21) eingebracht wird (Schritt (d)).

6. Verfahren nach einem der beiden vorhergehenden Ansprüche, wobei nach dem Einbringen des Formteils (10) in den Innenraum (21) (Schritt (a)) und vor dem Einbringen des Lösungsmittels in den Innenraum (21) (Schritt(d)) die Temperatur des Innenraumes auf eine dritte Innentemperatur gebracht wird, wobei die dritte Innentemperatur niedriger ist als die vorbestimmte zweite Innentemperatur, wodurch das Formteil auf eine Teiletemperatur gebracht wird, die niedriger ist als die vorbestimmte zweite Innentemperatur.

7. Verfahren nach einem der vorhergehenden Ansprüche, wobei
(e) nach dem Einbringen des Lösungsmittels in den Innenraum das Formteil getrocknet wird, wobei das Formteil vorzugsweise in dem den Unterdruck aufweisenden Innenraum (21) getrocknet, insbesondere vakuumgetrocknet wird.

8. Verfahren nach Anspruch 7, wobei zum Trocknen des Formteils in dem Innenraum (21) ein Unterdruck, vorzugsweise ein weitgehendes Vakuum, erzeugt wird, wobei das Erzeugen des Unterdruckes zumindest einmal unterbrochen wird, indem ein Transportgas dem Innenraum (21) zugeführt wird.

9. Verfahren nach dem vorhergehenden Anspruch, wobei das Transportgas dem Innenraum (21) zugeführt wird, wenn der Druck im Innenraum (21) kleiner ist als 50 mbar, wobei durch das Zuführen des Transportgases der Druck im Innenraum (21) auf einen Wert von zwischen 50 mbar und 100 mbar erhöht wird.

10. Verfahren nach einem der drei vorhergehenden Ansprüche, wobei die Schritte (d) und (e) mehrfach wiederholt werden.

11. Verfahren nach dem vorhergehenden Anspruch, wobei bei einer Wiederholung
- in dem Schritt (d) die Temperatur des Innenraumes auf eine zweite Innentemperatur gebracht wird, die höher ist als die zweite Innentemperatur bei der vorhergehenden Ausführung des Schrittes (d), oder
- in dem Schritt (d) die Temperatur des Innenraumes auf eine zweite Innentemperatur gebracht wird, die niedriger ist als die zweite Innentemperatur bei der vorhergehenden Ausführung des Schrittes (d), oder
- in dem Schritt (d) die Temperatur des Innenraumes auf eine zweite Innentemperatur gebracht wird, die gleich ist wie die zweite Innentemperatur bei der vorhergehenden Ausführung des Schrittes (d).

12. Verfahren nach dem vorhergehenden Anspruch, wobei bei einer Wiederholung vor dem Ausführen des Schrittes (d) die Temperatur des Innenraumes auf eine Temperatur gebracht wird, die niedriger oder höher ist als die zweite Innentemperatur bei der vorhergehenden Ausführung des Schrittes (d).

13. Verfahren nach einem der vorhergehenden Ansprüche, wobei das Formteil vor dem Schritt (a) erwärmt wird.

14. Verfahren nach einem der vorhergehenden Ansprüche, wobei das Lösungsmittel ausgewählt wird aus der Gruppe umfassend Acetaldehyd, Acetamid, Aceton, Acetonitril, Acetophenon, Acetylen, aliphatische Kohlenwasserstoffe, insbesondere Cyclohexan, Cyclohexen, Diisobutylen, Hexan, Octan, n-Pentan und Terpinen, Alkohole, insbesondere Benzylalkohol, Butylenglycol, Butanol, Ethanol, Ethylenglycol, Methanol, Allylalkohol, n-Propanol und Isopropanol, Amylacetat, Anilin, Anisol, Benzin, Benzaldehyd, Benzol, Chlorbenzol, Decalin, Dioxan, Dimethylamid, Diemethylformaid,, Diethylether, Dimethylformamid, Dimehtylsulfid, Dimethylsulfoxid, Ethylbenzol, Ethylacetat, Formaldehyd, Formamid, Furfurol, Halogenkohlenwasserstoffe, insbesondere Chlorbrommethan, Chloroform, Ethylenchlorid, Methylenchlorid, Perchlorethylen, Tetrachlormethan, Trichlorethan und Trichlorethylen, Menthon, Methyl-tert-butylether, Methylethylenketon, Nitrobenzol, Phenole, Phenylethylalkohol, Propanol, Pyridin, Styrol, Tetrahydrofuran, Tetrahydronaphthalin, Toluol, Triethanolamin, und Kombinationen hiervon.

15. Verfahren nach einem der vorhergehenden Ansprüche, wobei das Lösungsmittel ein destillierbares Lösungsmittel ist.

16. Verfahren nach einem der vorhergehenden Ansprüche, wobei das Material des Formteils ausgewählt wird aus der Gruppe umfassend Polyester, PA12 (Polyamid 12), PP (Polypropylen), TPU (thermoplastisches Polyurethan), TPE (Thermoplastische Elastomere), PA11 (Polyamid 11), PA6 (Polyamid 6), PA6.6 (Polyamid 6.6), glasgefülltes Polyamid, Keramik gefülltes Polyamid, PU (Polyurethan), ABS (Acrylnitril-Butadien-Styrol-Copolymere), PEK (Polyetherketone), PEI (Polyetherimide), PPS (Polyphenylensulfide) PLA (Polylactide), Cyanate Ester, Materialien die auf (Meth)acrylaten basieren, und Kombinationen hiervon.

17. Verfahren nach einem der vorhergehenden Ansprüche, wobei das Lösungsmittel auf die vorbestimmte Lösungsmitteltemperatur erwärmt wird, die oberhalb von 100°C liegt.

18. Verfahren nach einem der vorhergehenden Ansprüche, wobei die Druckdifferenz zwischen dem Innenraum (21) des druckdichten Behältnisses (20) und dem Innenraum des Lösungsmittelbehältnisses (40) so gewählt wird, dass das in den Innenraum (21) des druckdichten Behältnisses (20) eingebrachte Lösungsmittel aufgrund der Druckdifferenz verwirbelt wird, wobei der Druck im Innenraum (21) des druckdichten Behältnisses (20) vorzugsweise kleiner ist als der Druck im Innenraum des Lösungsmittelbehältnisses (40).

19. Vorrichtung zum Behandeln einer Oberfläche, insbesondere nach dem Verfahren nach einem der vorhergehenden Ansprüche, zumindest eines in einem 3D-Druckverfahren hergestellten Formteils (10), wobei die Vorrichtung aufweist
- ein druckdichtes Behältnis (20) mit einem Innenraum (21), in dem die zu behandelnden Formteile aufgenommen werden,
- ein Lösungsmittelbehältnis (40) zur Aufnahme eines Lösungsmittels (70), wobei das Lösungsmittelbehältnis (40) druckdicht ausgestaltet ist und wobei das Lösungsmittelbehältnis (40) eine Heizeinrichtung aufweist, um das in dem Lösungsmittelbehältnis aufgenommene Lösungsmittel zu erwärmen, und
- eine Vakuumpumpe (30),
wobei
- das Lösungsmittelbehältnis (40) über eine Zuleitung (25) mit dem druckdichten Behältnis gekoppelt ist, um das Lösungsmittel (70) aus dem Lösungsmittelbehältnis dem druckdichten Behältnis zuzuführen, und
- die Vakuumpumpe mit dem druckdichten Behältnis gekoppelt ist, um in dem druckdichten Behältnis einen Unterdruck, vorzugsweise ein weitgehendes Vakuum zu erzeugen, und
- wobei eine Vakuumpumpe mit dem Lösungsmittelbehältnis (40) gekoppelt ist, um in dem Lösungsmittelbehältnis (40) einen Unterdruck, vorzugsweise ein weitgehendes Vakuum zu erzeugen.

20. Vorrichtung nach dem vorhergehenden Anspruch, wobei das druckdichte Behältnis eine Heizeinrichtung aufweist, um den Innenraum und/oder die in den Innenraum aufgenommenen Formteile zu erwärmen.

## Claims

1. Method for treating the surface of at least one molded part (10) produced in a 3D printing method, wherein:
(a) the molded part (10) is introduced into an interior (21) of a pressure-tight container (20),
(b) a negative pressure is generated in the interior (21) of the container after the molded part (10) has been introduced into the container (20),
(c) a solvent is heated up to a predetermined solvent temperature, and
(d) after the molded part (10) has been introduced into the interior (21) of the container (20), the heated solvent is introduced from a solvent container (40) into the interior (21) having the negative pressure, wherein the solvent container (40) is designed to be pressure-tight and wherein a negative pressure, in particular an extensive vacuum, is generated in the interior of the solvent container (40) before the solvent is introduced from the solvent container (40) into the interior (21) of the pressure-tight container (20),
wherein
- the temperature of the molded part (10) is lower than the solvent temperature, and
- the solvent is evaporated or is introduced as a steam into the interior (21) upon being introduced into the interior (21), wherein the solvent steam condenses on the surface of the molded part (10).

2. Method according to the preceding claim, wherein after the molded part (10) has been introduced into the container (20), an extensive vacuum is generated in the interior (21) of the container, or wherein after the molded part (10) has been introduced into the container (20), a negative pressure which is less than 10 mbar is generated in the interior (21) of the container.

3. Method according to either of the preceding claims, wherein the interior (21) of the pressure-tight container (20) is brought to a predetermined first internal temperature before step (a) or after step (a).

4. Method according to the preceding claim, wherein by introducing the solvent into the interior (21) (step (d)), the temperature of the interior is brought to a predetermined second internal temperature, wherein
- the solvent is introduced into the interior until a predetermined second internal temperature is reached, or
- the solvent is introduced into the interior over a predetermined period of time, wherein the predetermined second internal temperature is reached after the predetermined period of time.

5. Method according to any of claims 1 to 3, wherein the solvent is introduced into the interior (21) over a period of between 1 s and 600 s, preferably between 5 s and 300 s (step (d)).

6. Method according to either of the two preceding claims, wherein after the molded part (10) has been introduced into the interior (21) (step (a)) and before the solvent has been introduced into the interior (21) (step (d)), the temperature of the interior is brought to a third internal temperature, wherein the third internal temperature is lower than the predetermined second internal temperature, whereby the molded part is brought to a part temperature which is lower than the predetermined second internal temperature.

7. Method according to any of the preceding claims, wherein:
(e) after the solvent has been introduced into the interior, the molded part is dried, wherein the molded part is preferably dried in the interior (21) having the negative pressure, in particular vacuum-dried.

8. Method according to claim 7, wherein a negative pressure, preferably an extensive vacuum, is generated to dry the molded part in the interior (21), wherein the generation of the negative pressure is interrupted at least once in that a transport gas is supplied into the interior (21).

9. Method according to the preceding claim, wherein the transport gas is supplied to the interior (21) when the pressure in the interior (21) is less than 50 mbar, wherein the pressure in the interior (21) is increased to a value of between 50 mbar and 100 mbar by supplying the transport gas.

10. Method according to any of the three preceding claims, wherein steps (d) and (e) are repeated multiple times.

11. Method according to the preceding claim, wherein, during a repetition,
- in step (d), the temperature of the interior is brought to a second internal temperature which is higher than the second internal temperature in the previous execution of step (d) or
- in step (d), the temperature of the interior is brought to a second internal temperature which is lower than the second internal temperature in the previous execution of step (d), or
- in step (d), the temperature of the interior is brought to a second internal temperature which is equal to the second internal temperature in the previous execution of step (d).

12. Method according to the preceding claim, wherein, if it is repeated before step (d) is executed, the temperature of the interior is brought to a temperature which is lower or higher than the second internal temperature in the previous execution of step (d).

13. Method according to any of the preceding claims, wherein the molded part is heated before step (a).

14. Method according to any of the preceding claims, wherein the solvent is selected from the group comprising acetaldehyde, acetamide, acetone, acetonitrile, acetophenone, acetylene, aliphatic hydrocarbons, in particular cyclohexane, cyclohexene, diisobutylene, hexane, octane, n-pentane and terpinene, alcohols, in particular benzyl alcohol, butylene glycol, butanol, ethanol, ethylene glycol, methanol, allyl alcohol, n-propanol and isopropanol, amyl acetate, aniline, anisole, benzine, benzaldehyde, benzene, chlorobenzene, decalin, dioxane, dimethylamide, dimethylformamide, diethyl ether, dimethylformamide, dimethyl sulfide, dimethyl sulfoxide, ethylbenzene, ethyl acetate, formaldehyde, formamide, furfural, halogenated hydrocarbons, in particular chlorobromomethane, chloroform, ethylene chloride, methylene chloride, perchlorethylene, tetrachloromethane, trichloroethane and trichlorethylene, menthone, methyl tert-butyl ether, methylethylene ketone, nitrobenzene, phenols, phenylethyl alcohol, propanol, pyridine, styrene, tetrahydrofuran, tetrahydronaphthalene, toluene, triethanolamine, and combinations thereof.

15. Method according to any of the preceding claims, wherein the solvent is a distillable solvent.

16. Method according to any of the preceding claims, wherein the material of the molded part is selected from the group comprising polyester, PA12 (polyamide 12), PP (polypropylene), TPU (thermoplastic polyurethane), TPE (thermoplastic elastomers), PA11 (polyamide 11), PA6 (polyamide 6), PA6.6 (polyamide 6.6), glass-filled polyamide, ceramic-filled polyamide, PU (polyurethane), ABS (acrylonitrile-butadiene-styrene copolymers), PEK (polyether ketone), PEI (polyetherimide), PPS (polyphenylene sulfide) PLA (polylactide), cyanate ester, materials based on (meth)acrylates, and combinations thereof.

17. Method according to any of the preceding claims, wherein the solvent is heated to the predetermined solvent temperature which is above 100°C.

18. Method according to any of the preceding claims, wherein the pressure difference between the interior (21) of the pressure-tight container (20) and the interior of the solvent container (40) is selected such that the solvent introduced into the interior (21) of the pressure-tight container (20) is swirled due to the pressure difference, wherein the pressure in the interior (21) of the pressure-tight container (20) is preferably lower than the pressure in the interior of the solvent container (40).

19. Device for treating a surface, in particular according to the method according to any of the preceding claims, of at least one molded part (10) produced according to a 3D printing method, wherein the device has
- a pressure-tight container (20) having an interior (21) in which the molded parts to be treated are received,
- a solvent container (40) for receiving a solvent (70), wherein the solvent container (40) is designed to be pressure-tight and wherein the solvent container (40) has a heating device for heating the solvent received in the solvent container, and
- a vacuum pump (30),
wherein
- the solvent container (40) is coupled to the pressure-tight container via a supply line (25) in order to supply the solvent (70) from the solvent container to the pressure-tight container and
- the vacuum pump is coupled to the pressure-tight container in order to generate a negative pressure, preferably an extensive vacuum, in the pressure-tight container, and
- wherein a vacuum pump is coupled to the solvent container (40) in order to generate a negative pressure, preferably an extensive vacuum, in the solvent container (40).

20. Device according to the preceding claim, wherein the pressure-tight container has a heating device in order to heat the interior and/or the molded parts received in the interior.

## Revendications

1. Procédé pour le traitement d'une surface d'au moins une pièce moulée (10) fabriquée par un procédé d'impression 3D, dans lequel :
(a) la pièce moulée (10) est introduite dans un espace intérieur (21) d'un récipient (20) étanche à la pression,
(b) après l'introduction de la pièce moulée (10) dans le récipient (20), une dépression est générée dans l'espace intérieur (21) du récipient,
(c) un solvant est chauffé jusqu'à une température de solvant prédéterminée, et
(d) après l'introduction de la pièce moulée (10) dans l'espace intérieur (21) du récipient (20), le solvant chauffé est introduit à partir d'un récipient pour solvant (40) dans l'espace intérieur (21) présentant la dépression, dans lequel le récipient pour solvant (40) est conçu de manière à être étanche à la pression et dans lequel, avant l'introduction du solvant depuis le récipient pour solvant (40) dans l'espace intérieur (21) du récipient (20) étanche à la pression, une dépression, en particulier un vide poussé, est générée dans l'espace intérieur du récipient pour solvant (40),
dans lequel
- la température de la pièce moulée (10) est inférieure à la température de solvant, et
- lors de l'introduction du solvant dans l'espace intérieur (21), le solvant s'évapore ou le solvant est introduit dans l'espace intérieur (21) en tant que vapeur de solvant, dans lequel la vapeur de solvant se condense sur la surface de la pièce moulée (10).

2. Procédé selon la revendication précédente, dans lequel, après l'introduction de la pièce moulée (10) dans le récipient (20), un vide poussé est généré dans l'espace intérieur (21) du récipient, ou dans lequel, après l'introduction de la pièce moulée (10) dans le récipient (20), une dépression inférieure à 10 mbar est générée dans l'espace intérieur (21) du récipient.

3. Procédé selon l'une des revendications précédentes, dans lequel, avant l'étape (a) ou après l'étape (a), l'espace intérieur (21) du récipient (20) étanche à la pression est amené à une première température intérieure prédéterminée.

4. Procédé selon la revendication précédente, dans lequel, par l'introduction du solvant dans l'espace intérieur (21) (étape (d)), la température de l'espace intérieur est amenée à une deuxième température intérieure prédéterminée, dans lequel
- le solvant est introduit dans l'espace intérieur jusqu'à ce que la deuxième température intérieure prédéterminée soit atteinte, ou
- le solvant est introduit dans l'espace intérieur pendant une période de temps prédéterminée, dans lequel la deuxième température intérieure prédéterminée est atteinte après la période de temps prédéterminée.

5. Procédé selon l'une des revendications 1 à 3, dans lequel le solvant est introduit dans l'espace intérieur (21) (étape (d)) pendant une période de temps comprise entre 1 s et 600 s, de préférence entre 5 s et 300 s.

6. Procédé selon l'une des deux revendications précédentes, dans lequel, après l'introduction de la pièce moulée (10) dans l'espace intérieur (21) (étape (a)) et avant l'introduction du solvant dans l'espace intérieur (21) (étape (d)), la température de l'espace intérieur est amenée à une troisième température intérieure, dans lequel la troisième température intérieure est inférieure à la deuxième température intérieure prédéterminée, moyennant quoi la pièce moulée est amenée à une température de pièce qui est inférieure à la deuxième température intérieure prédéterminée.

7. Procédé selon l'une des revendications précédentes, dans lequel
(e) après l'introduction du solvant dans l'espace intérieur, la pièce moulée est séchée, dans lequel la pièce moulée est de préférence séchée, en particulier séchée sous vide, dans l'espace intérieur (21) présentant la dépression.

8. Procédé selon la revendication 7, dans lequel une dépression, de préférence un vide poussé, est générée dans l'espace intérieur (21) pour le séchage de la pièce moulée, dans lequel la génération de la dépression est interrompue au moins une fois par le fait qu'un gaz de transport est acheminé dans l'espace intérieur (21).

9. Procédé selon la revendication précédente, dans lequel le gaz de transport est acheminé dans l'espace intérieur (21) lorsque la pression dans l'espace intérieur (21) est inférieure à 50 mbar, dans lequel l'acheminement du gaz de transport augmente la pression dans l'espace intérieur (21) à une valeur comprise entre 50 mbar et 100 mbar.

10. Procédé selon l'une des trois revendications précédentes, dans lequel les étapes (d) et (e) sont répétées plusieurs fois.

11. Procédé selon la revendication précédente, dans lequel, lors d'une répétition,
- dans l'étape (d), la température de l'espace intérieur est amenée à une deuxième température intérieure qui est supérieure à la deuxième température intérieure lors de l'exécution précédente de l'étape (d), ou
- dans l'étape (d), la température de l'espace intérieur est amenée à une deuxième température intérieure qui est inférieure à la deuxième température intérieure lors de l'exécution précédente de l'étape (d), ou
- dans l'étape (d), la température de l'espace intérieur est amenée à une deuxième température intérieure qui est identique à la deuxième température intérieure lors de l'exécution précédente de l'étape (d).

12. Procédé selon la revendication précédente, dans lequel, lors d'une répétition, avant l'exécution de l'étape (d), la température de l'espace intérieur est amenée à une température qui est inférieure ou supérieure à la deuxième température intérieure lors de l'exécution précédente de l'étape (d).

13. Procédé selon l'une des revendications précédentes, dans lequel la pièce moulée est chauffée avant l'étape (a).

14. Procédé selon l'une des revendications précédentes, dans lequel le solvant est choisi dans le groupe comprenant acétaldéhyde, acétamide, acétone, acétonitrile, acétophénone, acétylène, des hydrocarbures aliphatiques, en particulier cyclohexane, cyclohexène, diisobutylène, hexane, octane, n-pentane et terpinène, des alcools, en particulier alcool benzylique, butylène glycol, butanol, éthanol, éthylène glycol, méthanol, alcool allylique, n-propanol et isopropanol, acétate d'amyle, aniline, anisole, benzine, benzaldéhyde, benzène, chlorobenzène, décaline, dioxane, diméthylamide, diméthylformamide, éther diéthylique, diméthylformamide, diméthylsulfure, diméthylsulfoxyde, éthylbenzène, acétate d'éthyle, formaldéhyde, formamide, furfurol, des hydrocarbures halogénés, en particulier chlorobromométhane, chloroforme, chlorure d'éthylène, chlorure de méthylène, perchloroéthylène, tétrachlorométhane, trichloroéthane et trichloroéthylène, menthone, méthyl tert-butyl éther, méthyléthylènecétone, nitrobenzène, phénols, alcool phényléthylique, propanol, pyridine, styrène, tétrahydrofurane, tétrahydronaphtalène, toluène, triéthanolamine, et leurs combinaisons.

15. Procédé selon l'une des revendications précédentes, dans lequel le solvant est un solvant pouvant être distillé.

16. Procédé selon l'une des revendications précédentes, dans lequel le matériau de la pièce moulée est choisi dans le groupe comprenant polyester, PA12 (polyamide 12), PP (polypropylène), TPU (polyuréthane thermoplastique), TPE (élastomères thermoplastiques), PA11 (polyamide 11), PA6 (polyamide 6), PA6.6 (polyamide 6.6), polyamide chargé de verre, polyamide chargé de céramique, PU (polyuréthane), ABS (copolymères acrylonitrile-butadiène-styrène), PEK (polyéthercétones), PEI (polyétherimides), PPS (sulfure de polyphénylène), PLA (polylactides), esters de cyanate, matériaux à base de (méth)acrylates, et leurs combinaisons.

17. Procédé selon l'une des revendications précédentes, dans lequel le solvant est chauffé à la température de solvant prédéterminée, laquelle est supérieure à 100 °C.

18. Procédé selon l'une des revendications précédentes, dans lequel la différence de pression entre l'espace intérieur (21) du récipient (20) étanche à la pression et l'espace intérieur du récipient pour solvant (40) est choisie de sorte que le solvant introduit dans l'espace intérieur (21) du récipient (20) étanche à la pression est tourbillonné en raison de la différence de pression, dans lequel la pression dans l'espace intérieur (21) du récipient (20) étanche à la pression est de préférence inférieure à la pression dans l'espace intérieur du récipient pour solvant (40).

19. Dispositif pour le traitement d'une surface, en particulier selon le procédé selon l'une des revendications précédentes, d'au moins une pièce moulée (10) fabriquée par un procédé d'impression 3D, dans lequel le dispositif présente
- un récipient (20) étanche à la pression comportant un espace intérieur (21) dans lequel sont reçues les pièces moulées à traiter,
- un récipient pour solvant (40) destiné à recevoir un solvant (70), dans lequel le récipient pour solvant (40) est conçu de manière à être étanche à la pression et dans lequel le récipient pour solvant (40) présente un dispositif de chauffage afin de chauffer le solvant reçu dans le récipient pour solvant, et
- une pompe à vide (30),
dans lequel
- le récipient pour solvant (40) est accouplé au récipient étanche à la pression par l'intermédiaire d'une conduite d'acheminement (25) afin d'acheminer le solvant (70) au récipient étanche à la pression à partir du récipient pour solvant, et
- la pompe à vide est accouplée au récipient étanche à la pression afin de générer une dépression, de préférence un vide poussé, dans le récipient étanche à la pression, et
- dans lequel une pompe à vide est accouplée au récipient pour solvant (40) afin de générer une dépression, de préférence un vide poussé, dans le récipient pour solvant (40).

20. Dispositif selon la revendication précédente, dans lequel le récipient étanche à la pression présente un dispositif de chauffage afin de chauffer l'espace intérieur et/ou les pièces moulées reçues dans l'espace intérieur.
